# EUROPÄISCHE PATENTSCHRIFT

(11) **EP 2 427 314 B1**
(45) Veröffentlichungstag und Bekanntmachung des Hinweises auf die Patenterteilung: **27.09.2017**
(21) Anmeldenummer: 10792883.0
(22) Anmeldetag: 09.12.2010
(51) Int. Cl.: B29C 35/08, B29D 11/00, B29C 37/00

(54) **VERFAHREN UND VORRICHTUNG ZUM HERSTELLEN EINER STRUKTUR**
METHOD AND DEVICE FOR PRODUCING A STRUCTURE
PROCÉDÉ ET DISPOSITIF POUR FABRIQUER UNE STRUCTURE

(30) Priorität: 21.12.2009 DE 102009055080
(43) Veröffentlichungstag der Anmeldung: 14.03.2012
(60) Teilanmeldung: 17185410.2
(73) Patentinhaber: Fraunhofer-Gesellschaft zur Förderung der angewandten Forschung e.V., 80686 München (DE)
(72) Erfinder: WIPPERMANN, Frank, 98617 Meiningen (DE); DUPARRE, Jacques, 07745 Jena (DE); DANNBERG, Peter, 07745 Jena (DE); BRÄUER, Andreas, 07646 Schlöben (DE)
(74) Vertreter: Schenk, Markus
(86) Internationale Anmeldenummer: PCT/EP2010/069296
(87) Internationale Veröffentlichungsnummer: WO 2011/085880

(56) Entgegenhaltungen:
- WO-A1-2009/069940
- WO-A1-2009/110883
- WO-A2-03/004255
- US-A- 3 211 811
- US-A- 4 113 224
- US-A- 5 110 514
- US-A- 5 269 867

## Beschreibung

Die vorliegende Erfindung bezieht sich auf ein Konzept zum Herstellen einer Struktur aus aushärtbarem Material, beispielsweise einer optischen Linse aus einem UV-Polymer.

Zur Produktion bzw. Replikation optischer und mechanischer Strukturen kann die Technik der UV-Replikation genutzt werden.

Bei dieser Technik wird ein UV-härtender Kunststoff bzw. ein UV-härtendes Polymer, beispielsweise Ormocere, UV-Klebstoffe von Delo, Norland, Epoxy Technology, Panacol-Elosol mit einem Abformwerkzeug in die gewünschte Form gebracht und beispielsweise mit UV-Strahlung ausgehärtet. Die Abformung erfolgt in einem Maskenausrichter (englisch: "mask aligner"), der die genaue Positionierung des Abformwerkzeuges bzgl. Markierungen auf dem Substrat auf das abgeformt werden soll, ermöglicht. Zur Aushärtung wird das auf dem Substrat vorhandene Polymer durch das Werkzeug oder das Substrat gleichzeitig über die gesamte Fläche mit UV-Strahlung bestrahlt und mithin über die gesamte Fläche ausgehärtet.

Da an allen Stellen gleichzeitig ausgehärtet wird, bauen sich durch die unvermeidbare Schrumpfung Spannungen auf, die nach Entfernung des Werkzeugs zu Formabweichungen der abgeformten Strukturen sowie einer Durchbiegung des Substrats führen. Sollen die mit polymeren Strukturen versehenen Substrate mit weiteren Substraten verbunden werden, ergeben sich toleranz- und verfahrenstechnische Probleme, wie z.B. bei der Integration von Kameraobjektiven auf Wafer Level.

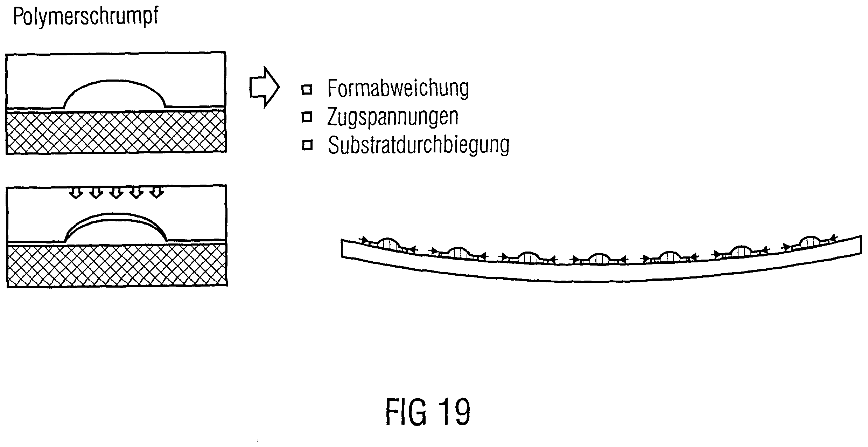

Fig. 19 zeigt beispielhaft auf der linken Seite den durch UV-Bestrahlung entstehenden Polymerschrumpf und damit die Formabweichung zwischen dem Werkzeug und der abgeformten Struktur, welche speziell bei optischen Anwendungen nicht akzeptiert werden kann. Die rechte Seite von Fig. 19 zeigt weiterhin, dass der Polymerschrumpf zusätzlich zur Formabweichung auch zu Zugspannung und einer Substratdurchbiegung des Substrats auf dem das Polymer abgeformt wurde, führt.

Die Veröffentlichung /1/ Jiseok LIM, Minseok CHO, Hokwan KIM, and Shinil KANG: "Fabrication of Hybrid Microoptics Using UV Imprinting Process with Shrinkage Compensation Method", Japanese Journal of Applied Physics, Vol. 47, No. 8, 2008, pp. 6719-6722, zeigt eine einstellbare Blende zur Schrumpfkompensation bei der Herstellung von Hybridlinsen, welche eine Kombination aus einer sphärischen Glaslinse mit einem zusätzlichen Polymerfilm zur Erzeugung eines asphärischen Profils darstellen. Die UV-Bestrahlung des Polymers erfolgt durch das Linsensubstrat. Als Blendenlagen werden in dieser Schrift veränderliche Irislinsen vorgeschlagen, die jedoch mechanisch kompliziert und damit teuer sind und einen erhöhten Bedarf an Bauraum besitzen.

Die WO2009/069940A1 zeigt eine Vorrichtung zur Herstellung einer Linse mit einer Gussform und einer Basis, wobei zwischen die Gussform und die Basis ein UVaushärtbares Material gegeben wird, welches die herzustellende Linse bildet. Eine Form der herzustellenden Linse wird vorgegeben durch die Gussform sowie die Basis.

Die WO03/004255A2 zeigt eine Vorrichtung mit einer transparenten aufblasbaren Membran. Die Vorrichtung dient dazu, um einen Linsenrohling mit einer Beschichtung zu versehen. Um Kleber gleichmäßig zwischen dem Linsenrohling und der Beschichtung zu verteilen wird ein Träger, auf welchem die Beschichtung angeordnet ist, mit Hilfe der Membran gleichmäßig gegen den Linsenrohling gepresst.

Die US 5,110,514 zeigt eine Vorrichtung und ein Verfahren zur Herstellung von Linsen, bei denen Schrumpfungen des aushärtbaren Materials durch nachfließendes Material aus einem Reservoir ausgeglichen werden können.

Die Aufgabe der vorliegenden Erfindung ist es, ein Konzept zu schaffen, welches bessere optische Eigenschaften bei der Herstellung von Strukturen aus aushärtbaren Materialien ermöglicht.

Ein Abformwerkzeug gemäß Anspruch 1, eine Vorrichtung gemäß Anspruch 4 und ein Verfahren gemäß Anspruch 7 lösen diese Aufgabe.

Ein erster Aspekt der vorliegenden Erfindung ist, dass eine bessere Kompensation der Schrumpfung des aushärtbaren Materials ermöglicht wird, wenn ein Bestrahlen eines aushärtbaren Materials in einem Bereich eines Abformwerkzeugs lokal variierend durchgeführt wird, so dass das aushärtbare Material lateral variierend unterschiedlich schnell aushärtet und Schrumpfungen beim Aushärten des aushärtbaren Materials durch weiteres aushärtbares Material ausgeglichen werden, wobei ein konstanter Druck an das weitere aushärtbare Material angelegt wird.

Ein Vorteil der vorliegenden Erfindung ist, dass durch das Anlegen eines äußeren Druckes an das weitere aushärtbare Material, der zusätzlich zu einer das weitere aushärtbare Material beeinflussenden Kraft hinzukommt, die aus einer Oberflächenspannung des aushärtbaren Materials bzw. des weiteren aushärtbaren Materials und einer Grenzfläche zwischen demselben und dem Abformwerkzeug resultiert, ein besseres Nachfließen des weiteren aushärtbaren Materials ermöglicht wird und damit eine bessere Kompensation der Schrumpfungen des aushärtbaren Materials ermöglicht wird, sowie bessere optische Eigenschaften des Formlings erhalten werden.

Ein weiterer Aspekt der vorliegenden Erfindung ist, dass eine bessere Kompensation des Materialschrumpfes eines aushärtbaren Materials erreicht werden kann, wenn eine Bestrahlung des aushärtbarem Materials in einem Bereich eines Abformwerkzeugs lokal variierend durch das Abformwerkzeug hindurch durchgeführt wird, so dass das Material lateral variierend unterschiedlich schnell aushärtet und Schrumpfungen beim Aushärten des aushärtbarem Materials durch weiteres aushärtbares Material ausgeglichen werden.

Durch das Bestrahlen durch das Abformwerkzeug wird der an eine Abformfläche des Abformwerkzeugs angrenzende Teil des aushärtbaren Materials zuerst ausgehärtet, so dass dort die optischen Eigenschaften des entstehenden Formlings ungestört sind. Zudem sind die Wege, die das nachfließende weitere aushärtbare Material zurücklegen muss reduziert, wodurch die optischen Eigenschaften des Formlings weiter verbessert werden.

Ausführungsbeispiele eines Abformwerkzeugs gemäß der vorliegenden Erfindung ermöglichen eine lokal variierende Bestrahlung auf eine einfache Weise, da eine Bestrahlung von oben durch das Abformwerkzeug hindurch möglich ist.

Bevorzugte Ausführungsbeispiele der vorliegenden Erfindung werden nachfolgend Bezug nehmend auf die beiliegenden Zeichnungen näher erläutert. Es zeigen:
- Fig. 1: ein Flussdiagramm eines Verfahrens gemäß einem Ausführungsbeispiel der vorliegenden Erfindung;
- Fig. 2: ein Flussdiagramm eines Verfahrens gemäß einem Ausführungsbeispiel der vorliegenden Erfindung;
- Fig. 3: eine Zeichnung eines Vergleiches eines bekannten Herstellungsverfahrens des *Stands* der Technik *mit* einem Verfahren gemäß einem Ausführungsbeispiel der vorliegenden Erfindung;
- Fig. 4: eine Zeichnung einer beispielhaften Blendenstruktur zur Verwendung in einem Ausführungsbeispiel der vorliegenden Erfindung;
- Fig. 5: eine schematische Darstellung einer Vorrichtung gemäß einem Ausführungsbeispiel der vorliegenden Erfindung;
- Fig. 6a-6c: Unteransichten und Schnittansichten von Abformwerkzeugen gemäß Ausführungsbeispielen der vorliegenden Erfindung und von abgeformten Elementen;
- Fig. 7: eine schematische Darstellung einer Schnittansicht einer Vorrichtung gemäß einem Ausführungsbeispiel der vorliegenden Erfindung;
- Fig. 8: eine schematische Darstellung einer Schnittansicht einer Vorrichtung gemäß einem Ausführungsbeispiel der vorliegenden Erfindung;
- Fig. 9: eine schematische Darstellung einer Schnittansicht einer Vorrichtung gemäß einem Ausführungsbeispiel der vorliegenden Erfindung;
- Fig. 10: eine schematische Darstellung einer Schnittansicht einer Vorrichtung gemäß einem Ausführungsbeispiel der vorliegenden Erfindung;
- Fig. 11: eine schematische Darstellung einer Schnittansicht einer Vorrichtung gemäß einem Ausführungsbeispiel der vorliegenden Erfindung;
- Fig. 12: eine schematische Darstellung einer Schnittansicht einer Vorrichtung gemäß einem Ausführungsbeispiel der vorliegenden Erfindung;
- Fig. 13: eine schematische Darstellung einer Schnittansicht einer Vorrichtung gemäß einem Ausführungsbeispiel der vorliegenden Erfindung;
- Fig. 14a: eine schematische Darstellung einer Schnittansicht einer Vorrichtung mit einem Abformwerkzeug zur Verwendung in einem Ausführungsbeispiel der vorliegenden Erfindung;
- Fig. 14b: eine schematische Darstellung einer Schnittansicht *einer* Vorrichtung gemäß einem Ausführungsbeispiel der vorliegenden Erfindung;
- Fig. 15: eine schematische Darstellung einer Schnittansicht einer Vorrichtung gemäß einem Ausführungsbeispiel der vorliegenden Erfindung;
- Fig. 16: eine schematische Darstellung einer Schnittansicht einer Vorrichtung gemäß einem Ausführungsbeispiel der vorliegenden Erfindung;
- Fig. 17: eine schematische Darstellung einer Schnittansicht einer Vorrichtung gemäß einem Ausführungsbeispiel der vorliegenden Erfindung;
- Fig. 18: eine schematische Darstellung einer Schnittansicht einer Vorrichtung gemäß einem Ausführungsbeispiel der vorliegenden Erfindung; und
- Fig. 19: eine schematische Darstellung eines bereits bekannten Verfahrens zur Herstellung von Strukturen aus aushärtbarem Material.

Bevor im Folgenden die vorliegende Erfindung anhand der Zeichnungen näher erläutert wird, wird darauf hingewiesen, dass gleiche Elemente mit den gleichen oder ähnlichen Bezugszeichen versehen sind und dass eine wiederholte Beschreibung dieser Elemente weggelassen wird.

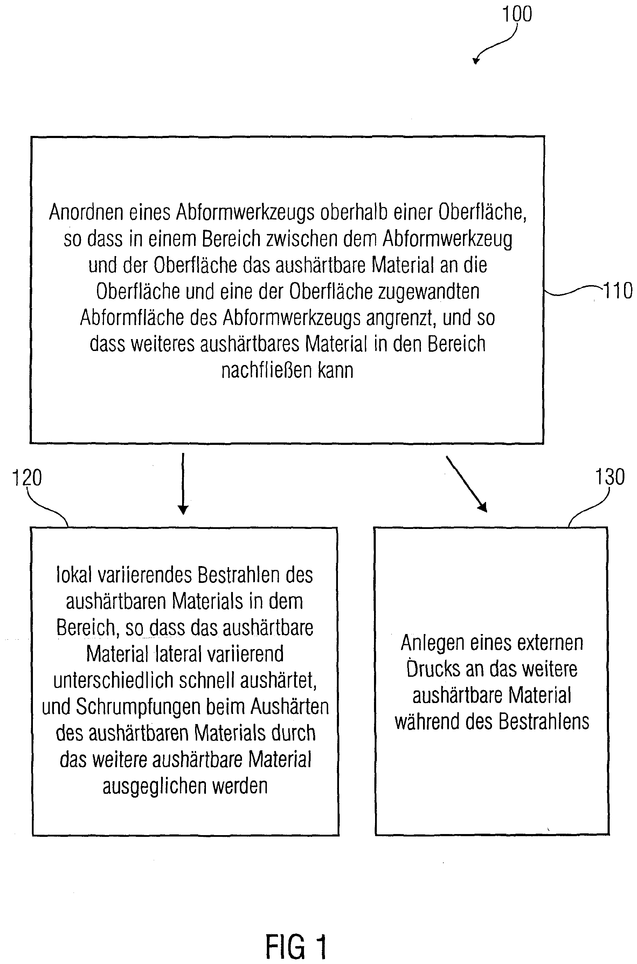

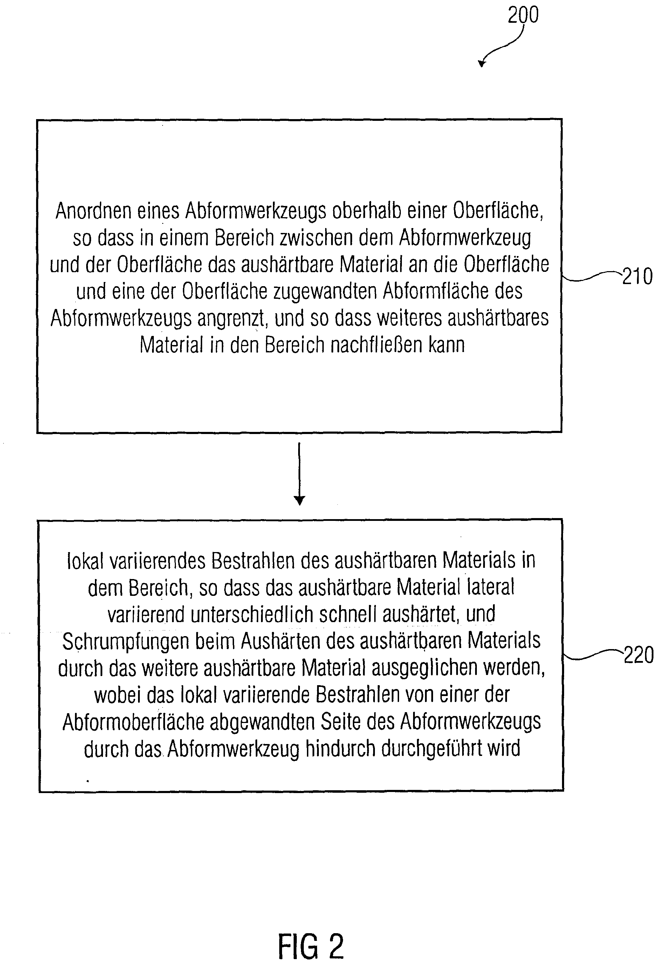

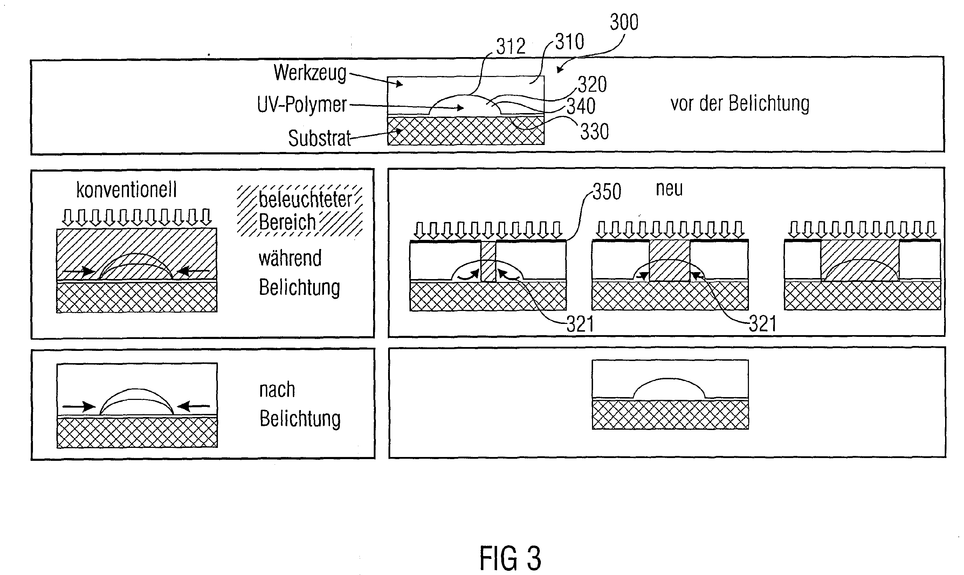

Die im Folgenden anhand der Figuren 1 und 2 beschriebenen Verfahren können beispielsweise mit Vorrichtungen wie sie anschließend an die Verfahren mit den Figuren 3-18 beschrieben werden, durchgeführt werden. Insbesondere beziehen sich die in den Beschreibungen der Verfahren verwendeten Bezugszeichen auf die im Anschluss beschriebenen Vorrichtungen.

Fig. 1 zeigt ein Flussdiagramm eines Verfahrens 100 gemäß einem Ausführungsbeispiel der vorliegenden Erfindung. Das Verfahren 100 zum Herstellen einer Struktur aus aushärtbarem Material durch Abformung umfasst einen ersten Schritt 110 des Anordnens eines Abformwerkzeugs 310 auf einer Oberfläche 330, beispielsweise einem Glassubstrat so dass in einem Bereich 340 zwischen dem Abformwerkzeug 310 und der Oberfläche 330 das aushärtbare Material 320, beispielsweise ein UV-Polymer an die Oberfläche 330 und eine der Oberfläche 330 zugewandten Abformfläche 312 des Abformwerkzeugs 310 angrenzt und so, dass weiteres aushärtbares Material 321 in den Bereich 340 nachfließen kann. Weiterhin umfasst das Verfahren 100 einen zweiten Schritt 120 des lokal variierenden Bestrahlens des aushärtbaren Materials 320 in dem Bereich 340, so dass das aushärtbare Material 320 lateral variierend unterschiedlich schnell aushärtet und Schrumpfungen beim Aushärten des aushärtbaren Materials 320 durch das weitere aushärtbare Material 321 ausgeglichen werden. Weiterhin umfasst das Verfahren 100 einen dritten Schritt 130 des Anlegens eines externen bzw. äußeren Druckes an das weitere aushärtbare Material, wobei der dritte Schritt 230 zeitlich parallel zu dem zweiten Schritt 220 ausgeführt werden kann.

Im Folgenden wird das aushärtbare Material auch als Polymer, UV-Polymer oder UV-härtender Kunststoff bezeichnet.

Fig. 2 zeigt ein Flussdiagramm eines Verfahrens 200 gemäß einem Ausführungsbeispiel der vorliegenden Erfindung. Das Verfahren 200 zum Herstellen einer Struktur aus aushärtbarem Material durch Abformung umfasst einen ersten Schritt 210 des Anordnens eines Abformwerkzeugs 310 auf einer Oberfläche 330, beispielsweise einem Glassubstrat so dass in einem Bereich 340 zwischen dem Abformwerkzeug 310 und der Oberfläche 330 das aushärtbare Material 320, beispielsweise ein UV-Polymer an die Oberfläche 330 und eine der Oberfläche 330 zugewandten Abformfläche 312 des Abformwerkzeugs 310 angrenzt und so, dass weiteres aushärtbares Material 321 in den Bereich 340 nachfließen kann. Weiterhin umfasst das Verfahren 200 einen zweiten Schritt 220 des lokal variierenden Bestrahlens des aushärtbaren Materials 320 in dem Bereich, so dass das aushärtbare Material 320 lateral variierend unterschiedlich schnell aushärtet und Schrumpfungen beim Aushärten des aushärtbaren Materials 320 durch das weitere aushärtbare Material 321 ausgeglichen werden, wobei das lokal variierende Bestrahlen von der Oberfläche 330 abgewandten Seite des Abformwerkzeugs 310 durch das Abformwerkzeug hindurch durchgeführt wird. Das Abformwerkzeug 310 kann dabei aus einem transparenten Material, beispielsweise Glas, Silikon oder transparentem Kunststoff, hergestellt sein.

Fig. 3 zeigt eine Zeichnung eines Vergleiches eines bekannten Herstellungsverfahrens des Stands der Technik mit einem Verfahren gemäß einem Ausführungsbeispiel der vorliegenden Erfindung, wobei auf der rechten eine schematische Darstellung einer Vorrichtung 300 gemäß einem Ausführungsbeispiel der vorliegenden Erfindung gezeigt ist und als Vergleichsbeispiel eine bereits aus dem Stand der Technik bekannte Vorrichtung zur Herstellung einer Struktur aus aushärtbarem Material durch Abformung auf der linken Seite. Die Vorrichtung 300 umfasst ein Abformwerkzeug 310, beispielsweise aus einem transparenten Material, eine Oberfläche 330, beispielsweise aus einem Glassubstrat, ein aushärtbares Material 320, beispielsweise ein UV-Polymer, welches zwischen einer Abformfläche 312 des Abformwerkzeugs 310 *und* der Oberfläche 330 in einem Bereich 340 angeordnet ist. Weiterhin umfasst die Vorrichtung 300 auf der rechten Seite im Gegensatz zu der bereits bekannten Vorrichtung auf der linken Seite ein Blendenfeld 350, welches auf einer der Oberfläche 330 ab gewandten Oberfläche des Abformwerkzeugs 310 angeordnet ist.

Bei der, auf der linken Seite von Fig. 3 gezeigten bereits bekannten Vorrichtung wird das aushärtbare Material durch das Abformwerkzeug hindurch mit UV-Strahlung über den gesamten Bereich gleichzeitig bestrahlt. Das UV-härtende Material schrumpft während der Bestrahlung, so dass Formabweichungen zwischen dem Abformwerkzeug der bereits bekannten Vorrichtung und der abgeformten Struktur entstehen. Im Gegensatz dazu ermöglicht die Vorrichtung 300 eine zeitliche Steuerung der Transmissionsfunktion der Beleuchtungsoptik, d.h. die Bestrahlung mit UV-Strahlung erfolgt nicht wie im links gezeigten Beispiel als Flutbelichtung über den gesamten Wafer bzw. das gesamte aushärtbare Material 320 gleichzeitig, sondern durch eine in ihrem Durchmesser variable Blende (z.B. Irisblende oder LCD-Display) bzw. durch ein Blendenfeld 350. Die Vorrichtung 300 führt damit ein lokal variierendes Bestrahlen des aushärtbaren Materials 320 in dem Bereich 340 durch, so dass das aushärtbare Material 320 lokal variierend unterschiedlich schnell aushärtet und Schrumpfungen beim Aushärten des aushärtbaren Materials 320 durch weiteres aushärtbares Material 321 ausgeglichen werden.

Mit anderen Worten gesagt, zeigt Fig. 3 beispielhaft auf seiner rechten Seite den Schritt 120 des lokal variierenden Bestrahlens, wobei hierbei das aushärtbare Material 320 durch das Werkzeug 310 zuerst mittig und dann zeitlich gestaffelt über den gesamten Bereich bestrahlt wird. Hierdurch wird das aushärtbare Material 320 bzw. das Polymer nur lokal ausgehärtet und nicht von UV-Strahlen belichtetes, da von der Blende bzw. Blendenschicht 350 abgeschirmtes und mithin noch flüssiges Polymer bzw. weiteres aushärtbares Material 321 nachfließen und den Schrumpf des bereits ausgehärteten Materials 320 bzw. Polymers ausgleichen kann.

Die variable Blende bzw. Blendenschicht 350 sorgt damit für eine zeitlich änderbare lokale Steuerung der Amplitude der Transmissionsfunktion.

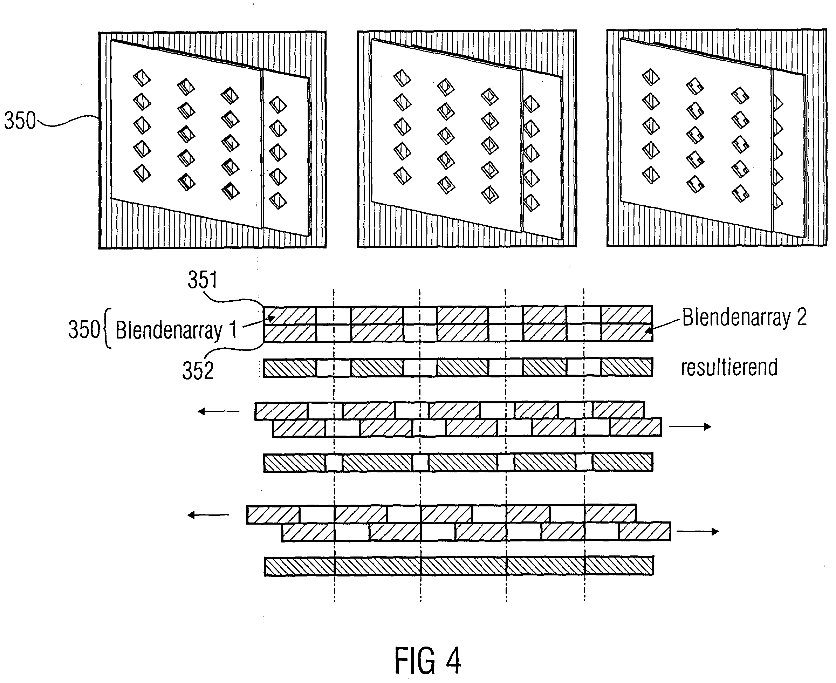

Fig. 4 zeigt eine schematische Darstellung einer beispielhaften Blendenschicht 350 zur Verwendung in einem Ausführungsbeispiel gemäß der vorliegenden Erfindung. Eine einfache Anordnung für veränderliche feldhafte Blendenstrukturen bzw. eine Blendenschicht 350 ergibt sich durch die Paarung zweier Blendenfelder 351 und 352 mit fixen Einzelblenden. Durch Verschieben der Blendenfelder 351 und 352 relativ zueinander ergeben sich in ihrer Größe simultan veränderliche Einzelblenden. Die Einzelblenden können dabei z.B. einfache rechteckige oder runde Öffnungen aufweisen. Der Abstand der Blenden bzw. der Einzelblenden entspricht dem Einfachen oder Mehrfachen des Abstandes der herzustellenden Strukturen bzw. Linsen, bei Herstellung eine Mehrzahl bzw. eines Feld von Strukturen. Werden beide Blendenfelder 351 und 352 mit dem gleichen Stellweg aber in entgegengesetzter Richtung verfahren, resultiert der Effekt eines am Ort verbleibenden Blendenfeldes 350 mit variabler Größe der Einzelblenden. Fig. 4 zeigt in dem unteren Teil die oben beschriebene Funktionsweise schematisch. Im Gegensatz zu anderen Blendenstrukturen, wie z.B. einer Irisblende oder einem LCD Display ist die gezeigte Blendenschicht 350 kostengünstig zu produzieren. Felder aus veränderlichen Irisblenden sind mechanisch kompliziert und damit teuer und besitzen einen erhöhten Bedarf an Bauraum. Die vorgeschlagene Blendenstruktur 350, ermöglicht damit auch eine preisgünstige Herstellung von Feldanordnungen von Strukturen.

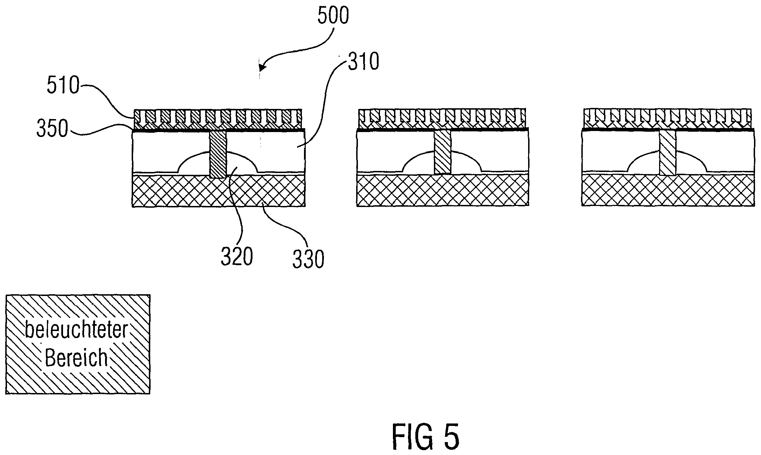

Fig. 5 zeigt eine Vorrichtung 500 gemäß einem Ausführungsbeispiel der vorliegenden Erfindung. Die Vorrichtung 500 umfasst im Gegensatz zu der Vorrichtung 300 zusätzlich zu der im Durchmesser einstellbaren Blende bzw. Blendenschicht 350 ein variables Graufilter 510. Das Graufilter 510 kann beispielsweise auf einer dem Abformwerkzeug 310 abgewandten Oberfläche der Blendenschicht 350 angeordnet sein.

Das variable Graufilter 510 kann zusätzlich die Amplitude der Transmissionsfunktion beeinflussen, dies ermöglicht eine Anpassung der Aushärtegeschwindigkeit des Polymers bzw. des aushärtbaren Materials 320. Anstatt einem Graufilter 510 kann prinzipiell auch eine Flüssigkristallanordnung zur Steuerung der Amplitude der Transmissionsfunktion genutzt werden oder eine andere Anordnung, welche eine Steuerung der Amplitude der Transmissionsfunktion ermöglicht.

Die Steuerung der Amplitude der Transmissionsfunktion wäre prinzipiell auch durch eine Anpassung der Beleuchtungsleistung der UV-Strahlungsquelle möglich, da jedoch Maskenausrichter ("mask aligner") genutzt werden sollen, ist diese Funktionalität zumeist nicht gegeben, da die Beleuchtungsleistung hier fix ist.

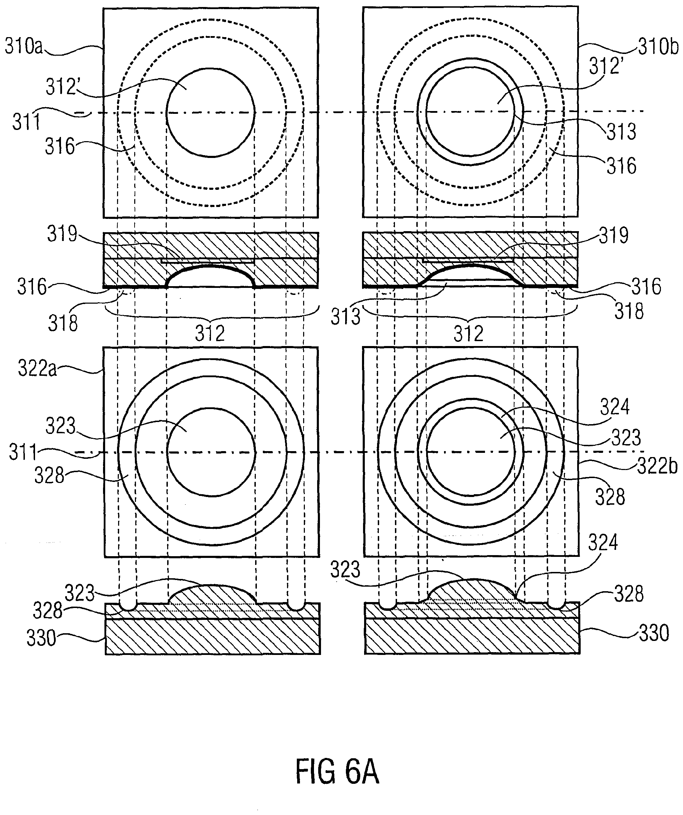

Fig. 6a zeigt auf seiner linken Seite eine Unteransicht eines Abformwerkzeuges 310a gemäß einem Ausführungsbeispiel der vorliegenden Erfindung und eine Schnittansicht des Abformwerkzeuges 310a, sowie eine Draufsicht auf ein durch das Abformwerkzeug 310a abgeformtes Element 322a und eine Schnittansicht des abgeformten Elements 322a. Weiterhin zeigt Fig. 6a auf der rechten Seite eine Unteransicht eines Abformwerkzeuges 310b und eine Schnittansicht des Abformwerkzeuges 310b, sowie eine Draufsicht auf ein durch das Abformwerkzeug 310b abgeformtes Element 322b und eine Schnittansicht des abgeformten Elements 322b.

Die Schnittansichten der in den Fig. 6a-6c gezeigten Abformwerkzeuge und abgeformten Elemente sind jeweils durch einen Schnitt durch die Abformwerkzeuge bzw. die abgeformte Elemente entlang einer Schnittachse 311 entstanden.

Das in Fig. 6a gezeigte Abformwerkzeug 310a weist eine Abformfläche 312 mit einem optischen Funktionsflächenbereich 312', auf. Die Abformfläche 312 ist, wenn das Abformwerkzeug 310a auf einer Oberfläche 330 aufgesetzt bzw. oberhalb derselben angeordnet wird, der Oberfläche 330 zugewandt. Weiterhin weist das Abformwerkzeug 310a eine umlaufende elastische Membran 316 an der Abformfläche 312 auf. Die elastische Membran 316 bedeckt die Abformfläche 312 vorliegend exemplarisch vollständig, obwohl eine teilweise Bedeckung ebenfalls möglich wäre, und ist in einem Umlaufbereich, der einen lateral geschlossenen Weg um den optischen Funktionsflächenbereich 312' bildet, nicht haftend aber an den Grenzen des Umlaufbereichs mit der Abformfläche 312 verbunden. Es ist damit möglich, ein Fluid wie z.B. Luft oder Öl zwischen Abformfläche 312 und der Innenseite der elastischen Membran 316 einzubringen, ohne dass dieses Fluid in Kontakt mit dem aushärtbaren Material 320 kommt. Der mit dem Fluid versehene Bereich zwischen der Abformfläche 312 und der Innenseite der elastischen Membran 316 bildet damit einen Kanal 318, welcher sich, wenn das Abformwerkzeug 310a auf der Oberfläche 330 aufgesetzt bzw. in einem Abstand zu dieser ausgerichtet wird, in Richtung der Oberfläche 330 vorwölbt, um dort noch nicht ausgehärtetes aushärtbares Material zu verdrängen und somit den Druck letzteren Materials zu erhöhen. Weiterhin weist das Abformwerkzeug 310a eine Struktur 319 zur lokal steuerbaren Divergenzanpassung auf.

Die Oberfläche 330 kann insbesondere eine Oberfläche eines Substrates sein, auf welche das Abformwerkzeug 310 aufgesetzt bzw. in einem Abstand zu dieser ausgerichtet wird, daher wird die Oberfläche 330 im Folgenden auch als Substrat 330 bezeichnet. Es sei aber auch darauf hingewiesen, dass gemäß weiteren Ausführungsbeispielen die Oberfläche 330 auch eine optisch relevante Oberfläche einer bereits abgeformten Struktur sein kann. Dies kann insbesondere bei der Herstellung von optischen Schichtstapeln, durch Übereinander-Abformung mehrerer Strukturen aus aushärtbaren Materialien der Fall sein.

Die optische Funktionsfläche 312' dient zur Definition einer optisch relevanten Oberfläche 323 des auf einem Substrat 330 bzw. der Oberfläche 330 abgeformten Elements 322a.

Der durch die während eines Abform- und Aushärtschritts unter Druck stehende Membran 316 erzeugte Kanal 318 hinterlässt in dem abgeformten Element 322a einen umlaufenden Graben 328, der allerdings ohne weitere Bewandtnis bleiben kann.

Das Aufbringen eines Drucks in der elastischen Membran 316 und damit die Erzeugung des Kanals 318 führt während des Abform- und Aushärtschritts zu einem Nachfließen von weiterem aushärtbaren Material in den Bereich der optisch relevanten Oberfläche 323 des abgeformten Elements 322a, um eine Schrumpfung des Polymervolumens während der Aushärtung auszugleichen. Die Struktur 319 zur Divergenzanpassung dient dem unkollimierten Bestrahlen, um eine Schlierenbildung vor allem im Bereich in und unterhalb der optisch relevanten Oberfläche 323 des abgeformten Elements 323a zu vermeiden. Die Struktur 319 zur Divergenzanpassung kann dabei beispielsweise ein Mikrolinsenfeld, eine diffraktive Struktur, ein Diffusor oder auch ein Auftrag von Farben und Pigmenten sein, welche den gleichen Effekt wie die erstgenannten Mikrostrukturen erzielen, aber einfach aufgedruckt anstatt aufwendig mikrostrukturiert werden zu müssen.

Das in Fig. 6a auf der rechten Seite gezeigte Abformwerkzeug 310b unterscheidet sich von dem auf der linken Seite gezeigten Abformwerkzeug 310a durch eine zusätzliche mechanische Funktionsfläche 313, welche die optische Funktionsfläche 312' umläuft. Dementsprechend weist das abgeformte Element 322b einen, die optisch relevante Oberfläche 323 umlaufenden mechanischen Funktionsrand 324 auf. Dieser mechanische Funktionsrand 324 kann beispielsweise nicht der optischen Funktion des abgeformten Elements 322b dienen, und kann damit nicht im Bereich der durch die Struktur 319 zur Divergenzanpassung erzeugten unkollimierten Strahlung liegen. Der optische Funktionsrand 324 kann beispielsweise zur Justage bzw. Arretierung des abgeformten Elements 322b bei einem Übereinanderstapeln mehrerer abgeformter Elemente dienen.

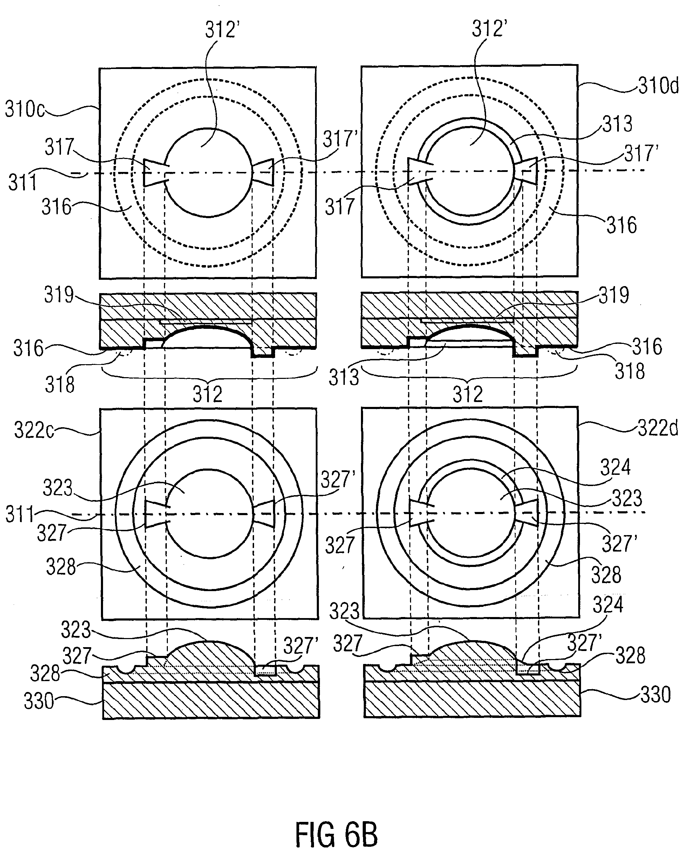

Fig. 6b zeigt auf seiner linken Seite eine Unteransicht eines Abformwerkzeuges 310c gemäß einem Ausführungsbeispiel der vorliegenden Erfindung und eine Schnittansicht des Abformwerkzeuges 310c, sowie eine Draufsicht auf ein durch das Abformwerkzeug 310c abgeformtes Element 322c und eine Schnittansicht des abgeformten Elements 322c. Weiterhin zeigt Fig. 6b auf seiner rechten Seite eine Unteransicht eines Abformwerkzeuges 310d gemäß einem Ausführungsbeispiel der vorliegenden Erfindung und eine Schnittansicht des Abformwerkzeuges 310d, sowie eine Draufsicht auf ein durch das Abformwerkzeug 310d abgeformtes Element 322d und eine Schnittansicht des abgeformten Elements 322d.

Das in Fig. 6b auf der linken Seite gezeigte Abformwerkzeug 310c unterscheidet sich von dem in Fig. 6a auf der linken Seite gezeigten Abformwerkzeug 310a dadurch, dass es angrenzend an die optische Funktionsfläche 312' periphere, nicht-rotationssymmetrische Strukturen 317, 317' aufweist. Eine erste periphere, nicht-rotationssymmetrische Struktur 317 bildet eine Vertiefung in der Abformfläche 312 des Abformwerkzeuges 310c. Eine zweite periphere, nicht-rotationssymmetrische Struktur 317' bildet eine Erhöhung in der Abformfläche 312 des Abformwerkzeuges 310c. Die erste periphere nicht-rotationssymmetrische Struktur 317 führt bei dem abgeformten Element 322c zu einer, an die optisch relevante Oberfläche 323 angrenzende periphere, nicht-rotationssymmetrische Erhöhung 327. Die zweite periphere, nicht-rotationssymmetrische Struktur 317' des Abformwerkzeuges 310c führt bei dem abgeformten Element 322c zu einer peripheren, nicht-rotationssymmetrischen Vertiefung 327'.

Die durch die peripheren nicht-rotationssymmetrischen Strukturen 317, 317' erzeugte Erhöhung 327 und Vertiefung 327' können insbesondere beim Übereinanderstapeln mehrerer abgeformter Elemente zur Arretierung der einzelnen Elemente dienen.

Obwohl in dem obigen Ausführungsbeispiel die Strukturen 317, 317' nicht rotationssymmetrisch sind, so können in weiteren Ausführungsbeispielen die Strukturen 317, 317' auch rotationssymmetrisch bzw. rotationsinvariant gegenüber Teilumdrehungen oder umlaufend sein. Weiterhin ist es möglich, dass das Abformwerkzeug 310c nur eine periphere Struktur oder eine beliebige Anzahl peripherer Strukturen aufweist. Diese können in ihrer Form und insbesondere in ihrer Ausbildungsrichtung bezüglich einer Oberfläche 330, auf die das Abformwerkzeug 310c aufgesetzt bzw. in einem Abstand zur Oberfläche 330 zu dieser ausgerichtet werden kann, variieren.

Das in Fig. 6b auf der rechten Seite gezeigte Abformwerkzeug 310d unterscheidet sich von dem in Fig. 6b auf der linken Seite gezeigten Abformwerkzeug 310d durch eine an die optische Funktionsfläche 312' anschließende, umschließende mechanische Funktionsfläche 313, an die sich die peripheren, nicht- rotationssymmetrischen Strukturen 317, 317' anschließen, um sich radial nach außen zu erstrecken.

Die mechanische Funktionsfläche 313 führt im abgeformten Element 322d zu einer umlaufenden mechanischen Umrandung 324, von der sich die Erhöhung 327 und die Vertiefung 327' wegerstrecken.

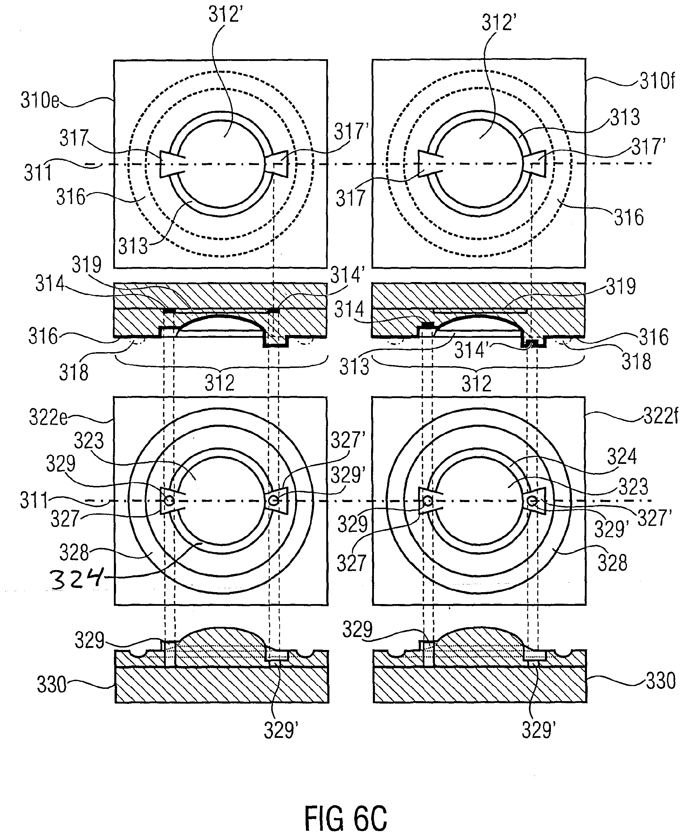

Fig. 6c zeigt auf seiner linken Seite eine Unteransicht eines Abformwerkzeuges 310e gemäß einem Ausführungsbeispiel der vorliegenden Erfindung und eine Schnittansicht des Abformwerkzeuges 310e, sowie eine Draufsicht auf ein durch das Abformwerkzeug 310e abgeformtes Element 322e und eine Schnittansicht des abgeformten Elements 322e. Weiterhin zeigt Fig. 6c auf *seiner* rechten Seite *eine* Unteransicht eines Abformwerkzeuges 310f gemäß einem Ausführungsbeispiel der vorliegenden Erfindung und eine Schnittansicht des Abformwerkzeuges 310f, sowie eine Draufsicht auf ein durch das Abformwerkzeug 310f abgeformtes Element 322f und eine Schnittansicht des abgeformten Elements 322f.

Das in Fig. 6c auf der linken Seite gezeigte Abformwerkzeug 310e unterscheidet sich von dem in Fig. 6b auf der rechten Seite gezeigten Abformwerkzeug 310d dadurch, dass lateral benachbart zu dem optischen Funktionsflächenbereich 312' eine erste Blendenstruktur 314 und eine zweite Blendenstruktur 314' angeordnet ist.

Die Blendenstrukturen 314, 314' dienen zur Abschirmung von Bereichen, welche während einer Bestrahlung durch das Abformwerkzeug 310e hindurch nicht ausgehärtet werden sollen.

Die Blendenstrukturen 314, 314' führen damit in dem abgeformten Element 322e zu einem senkrecht zur Oberfläche 330 verlaufenden ersten Kanal 329 und einem senkrecht zur Oberfläche 330 verlaufenden zweiten Kanal 329', in welchen nach einem Reinigungsvorgang bzw. Entwicklungsvorgang kein ausgehärtetes Material angeordnet ist. Die Kanäle 329, 329' können beispielsweise zum Eingeben eines Lösungsmittels, zum Lösen von löslichem aushärtbaren Material, um Lufträume zu erzeugen, genutzt werden.

Das in Fig. 6c auf der rechten Seite gezeigte Abformwerkzeug 310f unterscheidet sich von dem auf der linken Seite gezeigten Abformwerkzeug 310e durch eine andere Platzierung der Blendenstrukturen 314, 314'. Die erste Blendenstruktur 314 ist in der ersten peripheren, nicht-rotationssymmetrischen Struktur 317 des Abformwerkzeuges 310f angeordnet. Die zweite Blendenstruktur 314' ist in der zweiten peripheren, nicht-rotationssymmetrischen Struktur 317' des Abformwerkzeuges 310f angeordnet. Die Blendenstrukturen 314, 314' lassen sich besonders einfach, beispielsweise durch Auftragen von schwarzer Farbe, auf der Abformfläche 312 oder der elastischen Membran 316 in den Bereichen der peripheren nicht- rotationssymmetrischen Strukturen 317, 317' realisieren.

Das durch das Abformwerkzeug 310f abgeformte Element 322f unterscheidet sich nicht von dem abgeformten Element 322e.

Obwohl die in den Figuren 6a-6c beschriebenen Abformwerkzeuge 310a-310f zur Herstellung abgeformter Elemente 322a-322f mit einer konvexen optisch relevanten Oberfläche 323 dienen, so können in weiteren Ausführungsbeispielen Abformwerkzeuge ausgebildet sein, um abgeformte Elemente *mit* konkaven, konvexen, *planen* oder auch freiflächenartigen optisch relevanten Oberflächen abzuformen.

Die in den Figuren 6a-6c gezeigten abgeformten Elemente 323a-323f können beispielsweise optische Linsen bilden. Obwohl in den gezeigten Ausführungsbeispielen eine plankonvexe Linsenform dargestellt *ist,* so ist es auch möglich, dass in weiteren Ausführungsbeispielen abgeformte Elemente beliebige andere Linsenformen aufweisen.

Obwohl in den oben gezeigten Ausführungsbeispielen zwei Blendenstrukturen 314, 314' angeordnet sind, so ist es auch möglich, dass Abformwerkzeuge eine Blendenstruktur oder eine beliebige Anzahl von Blendenstrukturen aufweisen oder gar keine Blendenstrukturen aufweisen.

Obwohl in den oben gezeigten Ausführungsbeispielen die Blendenstrukturen 314, 314' exemplarisch so angeordnet sind, dass sich die senkrecht zur Oberfläche 330 verlaufenden Kanäle 329, 329' lateral im Bereich der peripheren nicht rotationssymmetrischen Strukturen 327, 327' bilden, so wäre es auch möglich, dass die Blendenstrukturen 314, 314' an anderen Positionen in den Abformwerkzeugen 310e, 310f angeordnet sind, beispielsweise außerhalb dem optischen Funktionsflächenbereich 312', um die senkrecht zur Oberfläche 330 verlaufenden Kanäle an anderen Stellen in den abgeformten Elementen 322e, 322f zu bilden.

Weiterhin kann in weiteren Ausführungsbeispielen das Substrat bzw. die Oberfläche 330 nicht eben, sondern eine andere beliebige Form aufweisen, beispielsweise als ein Gegenstück zu den Abformwerkzeugen 310a-310f.

Die abgeformten Elemente 322a-322f stellen hochpräzise Negativabbilder der Abformwerkzeuge 310a-310f dar.

Die Blendenstrukturen 314, 314' können also zur Abschirmung des flüssigen Polymers bzw. weiteren aushärtbaren Materials während der Bestrahlung mit UV-Licht für die Schaffung von Kavitäten bzw. Hohlräumen und/oder senkrecht zum Substrat bzw. der Oberfläche 330 verlaufender Kanäle 329, 329', in den abgeformten Elementen 322e-322f dienen. Nach der Aushärtung durch UV-Bestrahlung unter Nutzung des Schritts *120* verbleiben nach einem nachfolgenden Reinigungsschritt zur Entfernung von nicht bestrahltem und mithin flüssigem Polymer bzw. aushärtbarem Material Kavitäten bzw. Hohlräume und/oder senkrecht zum Substrat bzw. der Oberfläche 330 verlaufende Kanäle 329, 329' in der hergestellten Struktur bzw. den abgeformten Elementen 322e-322f.

Weiterhin kann in einem weiteren Schritt die Oberfläche 330 bzw. das Substrat 330 entfernt oder ein weiteres Element auf einem bereits abgeformten Element abgeformt werden.

Gemäß weiteren Ausführungsbeispielen können Abformwerkzeuge darüber hinaus Blendenstrukturen zum Vorhalt von Polymervolumen, das nicht gehärtet wird, aufweisen, da in Folge der Schrumpfung bei der Aushärtung des Polymers um beispielsweise 1 bis 10% ein größeres Volumen flüssigen Polymers bzw. aushärtbaren Materials vorhanden sein muss als später vorhandenes ausgehärtetes.

Also sind Blendenstrukturen zum Vorhalt von Polymervolumen vorgesehen um eine Bestrahlung und mithin Aushärtung durch UV-Strahlung zu verhindern. Das unter den Blendenstrukturen zum Vorhalt von Polymervolumen vorhandene flüssige Polymer bzw. weitere aushärtbare Material, dient damit also beispielsweise als Reservoir des erforderlichen Mehrvolumens an flüssigem Polymer bzw. aushärtbarem Material zur Schrumpfkompensation

Die Blendenstrukturen zum Vorhalt von Polymervolumen können beispielsweise zusammen mit den Blendenstrukturen zur Schaffung von senkrecht zur Oberfläche verlaufender Kanäle in einer gemeinsamen Blendenstruktur oder mehreren gemeinsamen Blendenstrukturen vereint werden.

Auf Blendenstrukturen zum Vorhalt von Polymervolumen kann beispielsweise verzichtet werden (wie dies in den Abformwerkzeugen 310e, 310f gezeigt ist), wenn zum Vorhalt des flüssigen Polymers alle Bereiche außerhalb eines optischen Funktionsflächenbereichs eines Abformwerkzeugs genutzt werden und die Bestrahlung zeitlich sequentiell von innen (beginnend bei dem optischen Funktionsflächenbereich) nach außen durchgeführt wird, die Bereiche außerhalb dem optischen Funktionsflächenflächenbereich können nicht abgedeckt sein, da hier aufgrund der zeitlich sequentiellen Bestrahlung eine Bestrahlung erst nach der Bestrahlung des optischen Funktionsflächenbereichs erfolgt.

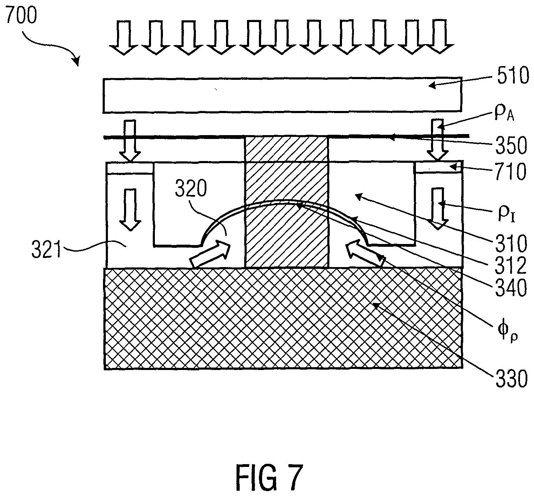

Fig. 7 zeigt eine schematische Darstellung einer Schnittansicht einer Vorrichtung 700 gemäß einem Ausführungsbeispiel der vorliegenden Erfindung. Die Vorrichtung 700 umfasst eine Oberfläche 330, beispielsweise aus einem Glassubstratmaterial. Auf der Oberfläche 330 ist ein Abformwerkzeug 310 so angeordnet, dass sich aushärtbares Material 320 zwischen einer der Oberfläche 330 zugewandten Abformfläche 312 in einem Bereich 340 befinden kann. Das Abformwerkzeug 310 ist weiterhin von weiterem aushärtbaren Material 321 umgeben. An seinem äußeren Rand weist das Abformwerkzeug 310 eine umlaufende elastische Membran 710 auf. Auf einer der Oberfläche 330 nicht zugewandten Oberfläche des Abformwerkzeugs 310 weist die Vorrichtung 700 eine variable Blendenschicht 350 auf. An die Blendenschicht 350 grenzt ein variables Graufilter 510 an. Weiterhin kann am Rand der Vorrichtung 700 eine umlaufende Dichtung, beispielsweise aus einem elastischen Material angeordnet *sein.*

Die in Fig. 7 gezeigte Vorrichtung 700 ermöglicht die Aufbringung eines statischen Drucks pₐ auf das flüssige Polymer bzw. das weitere aushärtbare Material 321. D.h. ein äußerer statischer Druck pₐ kann z.B. durch einen Stempel auf die elastische Membran 710 aufgebracht werden, wodurch ein innerer statischer Druck pᵢ in dem durch die elastische Membran 710 und der umlaufenden Dichtung abgedichteten Bereich entsteht. Der innere Druck pᵢ führt zu einer Verbesserung des Transports bzw. des Flusses Φ_{P} des flüssigen Polymers bzw. weiteren aushärtbaren Materials 321 an die durch die veränderlichen Blenden bzw. Blendenschichten 350 lokal eingegrenzten Stellen der stattfindenden Aushärtung des Polymers, um eine verbesserte Schrumpfkompensation zu erzielen.

Mit anderen Worten gesagt, weist das Abformwerkzeug 310 Durchbrüche auf, über die auf das flüssige Polymer bzw. weitere aushärtbare Material 321 von außen Druck pₐ z.B. durch einen Stempel ausgeübt werden kann. Der äußere statische Druck pₐ kann dabei vorzugsweise über die elastische Membran 710, welche beispielsweise aus PDMS - Polydimethylsiloxan hergestellt ist, auf das flüssige Polymer bzw. weitere aushärtbare Material 321 über einen Stempel bzw. durch Nutzung hydraulischer oder pneumatischer Mimiken übertragen werden. Gleichzeitig kann durch die elastische Membran 710 ein Kontakt nach außen verhindert werden. Die umlaufende Dichtung, beispielsweise aus einem elastischen Material am Rand der Vorrichtung 700 bzw. dem Wafer dient zur Aufrechterhaltung des Drucks. Um den Transport bzw. den Fluss des flüssigen Polymers Φ_{P} an allen Stellen innerhalb der Dichtung zu gewährleisten, ist die gesamte Oberfläche des Wafers bzw. der Vorrichtung 700 mit einer durchgehenden Schicht flüssigen Polymers bzw. aushärtbaren Materials versehen und bildet damit aus hydrodynamischer Sicht korrespondierende Röhren und verfügen mithin über denselben inneren statischen Druck pᵢ.

Die Vorrichtung 700 ermöglicht damit, dass während des Schritts des *lokal* variierenden Bestrahlens 120 weiterhin zeitlich parallel der Schritt 130 des Anlegens eines konstanten Drucks an das weitere aushärtbare Material 321 durchgeführt werden kann. Dadurch wird gewährleistet, dass während der Aushärtung des aushärtbaren Materials entstehende Hohlräume durch nachfließendes weiteres aushärtbares Material 321 kompensiert werden und damit *eine* verbesserte Schrumpfkompensation erzielt wird.

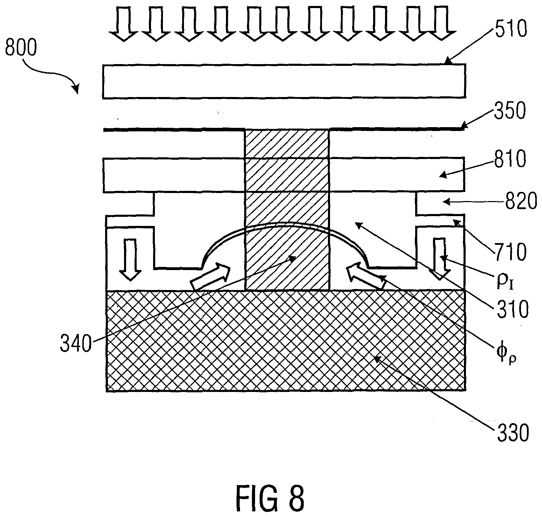

Fig. 8 zeigt eine schematische Darstellung einer Schnittansicht einer Vorrichtung 800 gemäß einem Ausführungsbeispiel der vorliegenden Erfindung. Die Vorrichtung 800 unterscheidet sich durch die Vorrichtung 700 dadurch, dass zwischen der von der Oberfläche 330 abgewandten Oberfläche des Abformwerkzeugs 310 und der dem Abformwerkzeug 310 zugewandten Oberfläche der Blendenschicht 350 ein Werkzeugsubstrat 810 angeordnet ist. Das Werkzeugsubstrat 810 in Form einer planen Platte grenzt an die der Oberfläche 330 abgewandten Oberfläche des Abformwerkzeugs 310 an. Die Vorrichtung 800 weist darüber hinaus zwischen dem Werkzeugsubstrat 810 und dem Abformwerkzeug 310 an den äußeren Rändern des Abformwerkzeugs 310 einen Kanal 820 für Hydraulik bzw. Pressluft zur Aufbringung von Druck auf.

Im Gegensatz zur Vorrichtung 700 wird in der hier beschriebenen Vorrichtung 800 der äußere statische Druck pₐ nicht durch einen Stempel sondern durch Hydraulik bzw. Pressluft im Kanal 820 erzeugt.

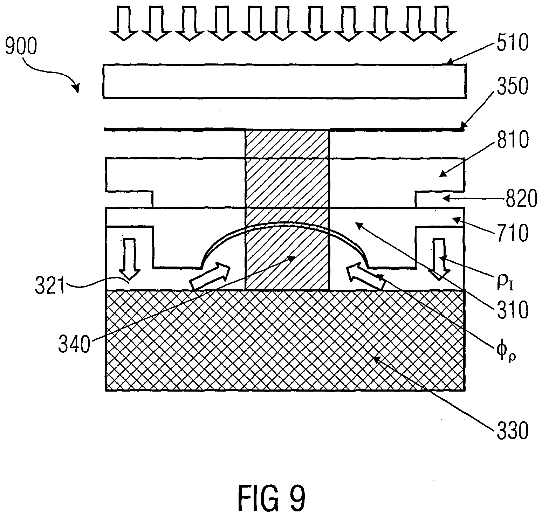

Fig. 9 zeigt eine schematische Darstellung einer Schnittansicht einer Vorrichtung 900 gemäß einem Ausführungsbeispiel der vorliegenden Erfindung. Wie auch schon die vorherige Vorrichtung 800, nutzt auch die Vorrichtung 900 hydraulische bzw. pneumatische Mimiken zur Aufbringung des äußeren statischen Drucks pₐ auf das weitere aushärtbare Material 321. Die Vorrichtung 900 unterscheidet sich von der Vorrichtung 800 durch eine andere Form des Werkzeugsubstrats 810 und des Abformwerkzeugs 310. Während bei der Vorrichtung 800 das Werkzeugsubstrat 810 in einer Schnittansicht eine rechteckige Form aufweist, so weist bei der hier gezeigten Vorrichtung 900 das Werkzeugsubstrat 810 in einer Schnittansicht eine T-förmige Form auf, welche den Kanal 820 für Hydraulik bzw. Pressluft zur Aufbringung von Druck vorgibt. Die der Oberfläche 330 abgewandte Oberfläche des Abformwerkzeugs 310 der Vorrichtung der 900, weist im Gegensatz zu der der Oberfläche 330 abgewandten Oberfläche des Abformwerkzeugs 310 der Vorrichtung 800 eine durchgängig flächige Form auf. Die Funktionsweise der Vorrichtung 900 ist analog zur Funktionsweise der Vorrichtung 800.

Die in den Figuren 7-9 gezeigten Vorrichtungen beschränken sich auf die Herstellung einer Struktur bzw. Linse, sinnvollerweise werden die gezeigten Vorrichtungen in Feldern mehrerer tausend dieser Vorrichtungen, beispielsweise auf einem Wafer angeordnet, um in einem Prozess mehrere tausend - entsprechend der Anzahl der Vorrichtungen - Strukturen bzw. *Linsen* herzustellen. Im Folgenden *soll* daher gezeigt werden, wie Anordnungen mehrerer solcher Vorrichtungen ausgebildet sein können. Es sei erwähnt, dass der Abstand zwischen mehreren Vorrichtungen in einem Feld, im Folgenden der Übersichtlichkeit halber stark verkleinert dargestellt ist.

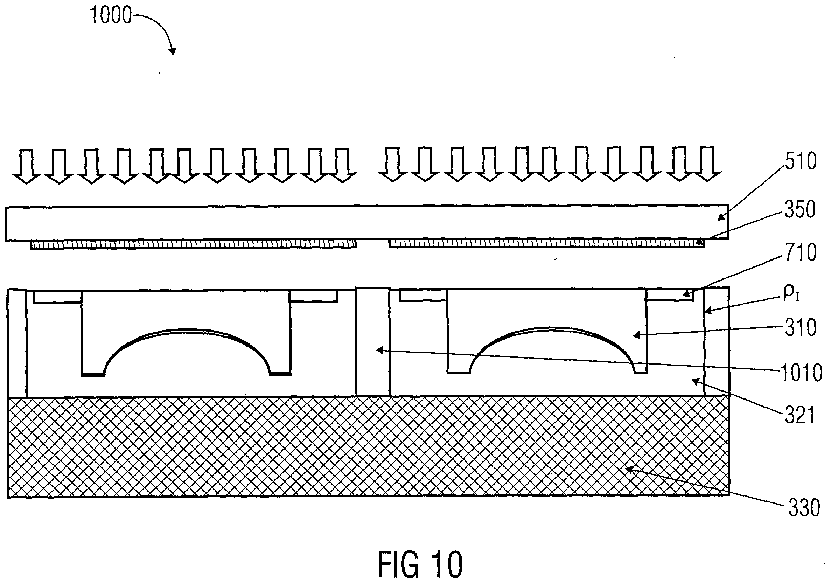

Fig. 10 zeigt eine schematische Darstellung einer Schnittansicht einer Vorrichtung 1000 gemäß einem Ausführungsbeispiel der vorliegenden Erfindung. Die Vorrichtung 1000 kann mehrere der Vorrichtungen 700 umfassen. In Fig. 10 sind zwei Vorrichtungen 700 gezeigt, welche durch umlaufende Wände 1010 aus ausgehärtetem Polymer zur Realisierung einer geschlossenen Kavität von einander getrennt sind.

Die Vorrichtung 1000 ermöglicht damit eine Aufbringung eines äußeren statischen Drucks pₐ auf das flüssige Polymer bzw. aushärtbare Material 320, ohne eine durchgehende Polymerschicht bzw. Schicht aus aushärtbarem Material 320. Mit anderen Worten gesagt, wird in jeder Teilvorrichtung 700 der Vorrichtung 1000 ein statischer innerer Einzeldruck pᵢ erzeugt.

Zur Einsparung von Polymermaterial bzw. aushärtbarem Material, welches sich zwischen den optisch wirksamen Flächen befindet, also Flächen, welche bestrahlt werden, kann ein zweigeteilter Belichtungsprozess durchgeführt werden. Hierbei wird in einem ersten Schritt durch die Blendenschicht 350 der Bereich der optischen Flächen der herzustellenden Struktur sowie der Kanäle zur Aufbringung des statischen Drucks pₐ abgeschattet. Als Folge der ersten Bestrahlung bilden sich um jede optische Fläche, also Bereiche in denen später die herzustellenden Strukturen abgeformt werden umlaufende Wände 1010 ausgehärteten Polymers bzw. ausgehärteten aushärtbaren Materials. Die einzelnen optischen Flächen sind damit von den anderen Flächen separiert, mit anderen Worten entsteht eine Unterteilung der Vorrichtung 1000 in mehrere Teilvorrichtungen 700. In einem zweiten Schritt kann nun in den resultierenden Kammern bzw. Teilvorrichtungen 700 unabhängig von den anderen Kammern statischer Druck pᵢ aufgebaut werden, um das Nachfließen Φ_{P} des Polymers bzw. weiteren aushärtbaren Materials 321 während der zweiten Aushärtung, durch die im Durchmesser veränderlichen Blenden bzw. Blendenschichten 350 zu gewährleisten. Die zweite Aushärtung bzw. der Schritt 120 des lokal variierenden Bestrahlens erfolgt damit nach dem gleichen Schema, wie bereits im Verfahren 100 beschrieben.

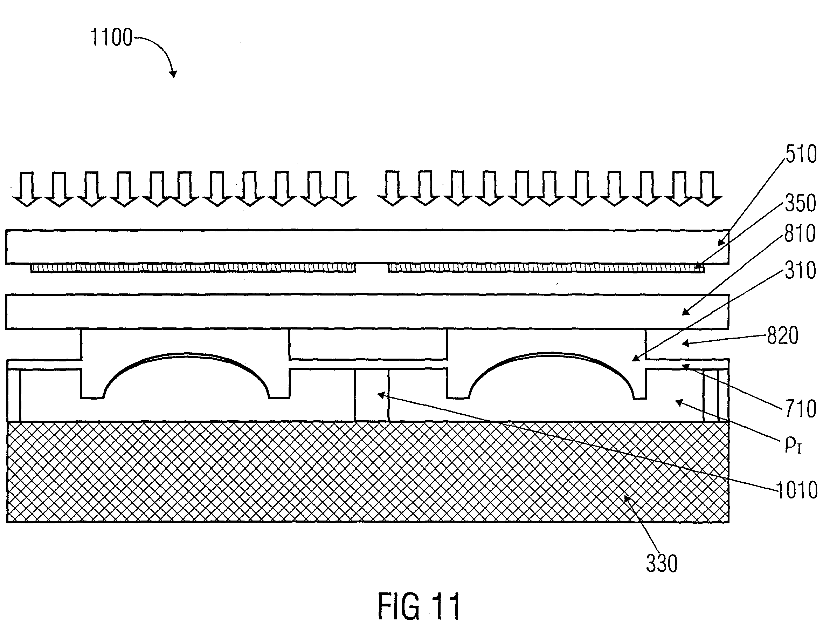

Fig. 11 zeigt eine schematische Darstellung einer Schnittansicht einer Vorrichtung 1100 gemäß einem Ausführungsbeispiel der vorliegenden Erfindung. Die Vorrichtung 1100 zeigt analog zur Vorrichtung 1000 eine Anordnung mehrerer Vorrichtungen 800, getrennt durch umlaufende Wände 1010 aus ausgehärtetem *Polymer* zur Realisierung einer geschlossenen Kavität. Die Herstellung der umlaufenden Wände 1010 erfolgt wie bereits bei der Vorrichtung 1000 beschrieben.

Die Funktionsweise der Vorrichtung 1100 ist analog zur Funktionsweise der Vorrichtung 1000.

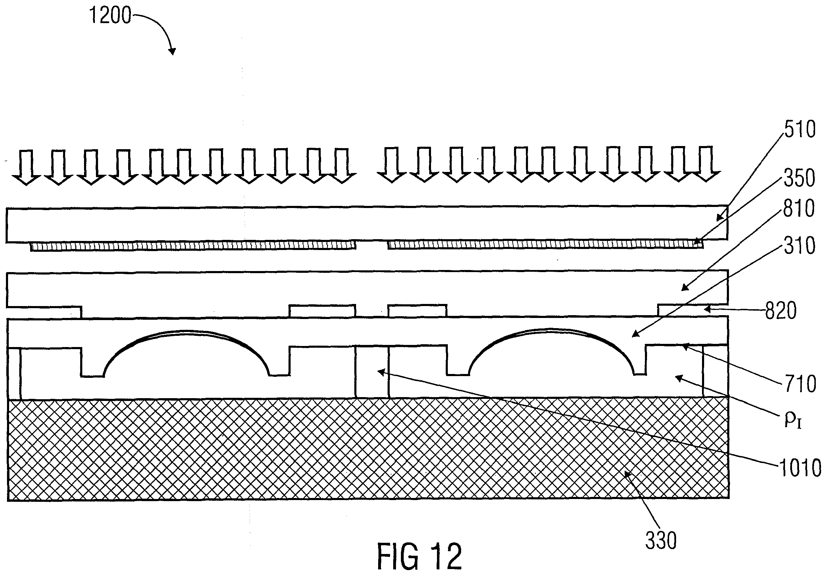

Fig. 12 zeigt eine schematische Darstellung einer Schnittansicht einer Vorrichtung 1200 gemäß einem Ausführungsbeispiel der vorliegenden Erfindung. Die Vorrichtung 1200 umfasst analog zu den Vorrichtungen 1000 und 1100 eine Anordnung mehrerer Vorrichtungen 900, getrennt durch umlaufende Wände 1010 aus ausgehärtetem Polymer zur Realisierung einer geschlossenen Kavität. Die Herstellung der umlaufenden Wände 1010 erfolgt wie bereits bei der Vorrichtung 1000 beschrieben.

Die Funktionsweise der Vorrichtung 1200 ist analog zur Funktionsweise der Vorrichtungen 1000 und 1100.

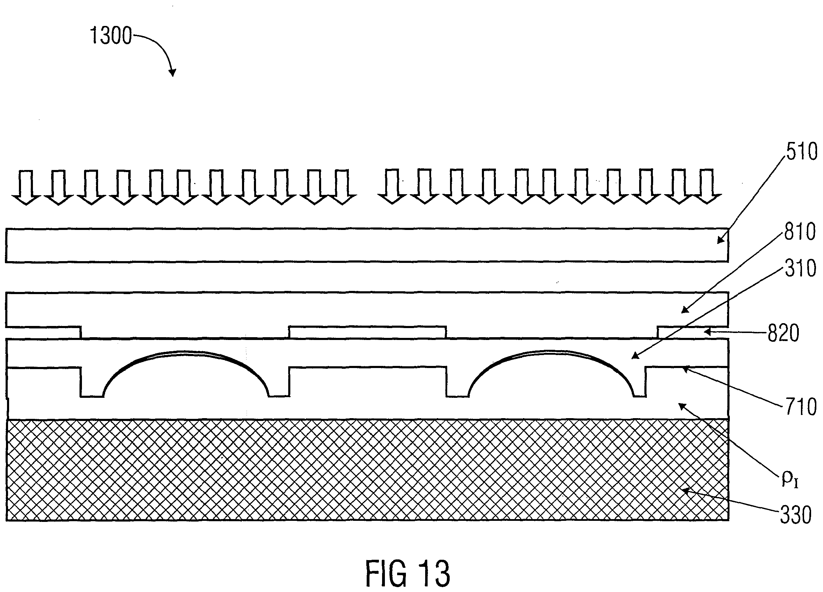

Fig. 13 zeigt eine schematische Darstellung einer Schnittansicht einer Vorrichtung 1300 gemäß einem Ausführungsbeispiel der vorliegenden Erfindung. Die Vorrichtung 1300 umfasst eine Anordnung mehrerer Vorrichtungen 900, wobei diese nicht durch umlaufende Wände aus ausgehärtetem Polymer getrennt voneinander sind. Weiterhin wird das lokal variierende Bestrahlen, anstatt durch eine variable Blendenschicht 350 nur durch ein variables Graufilter 510 gesteuert. Da die einzelnen Vorrichtungen 900 nicht durch umlaufende Wände aus ausgehärtetem Polymer getrennt sind, kann auf einen ersten Schritt des Aushärtens optisch nicht aktiver Flächen verzichtet werden.

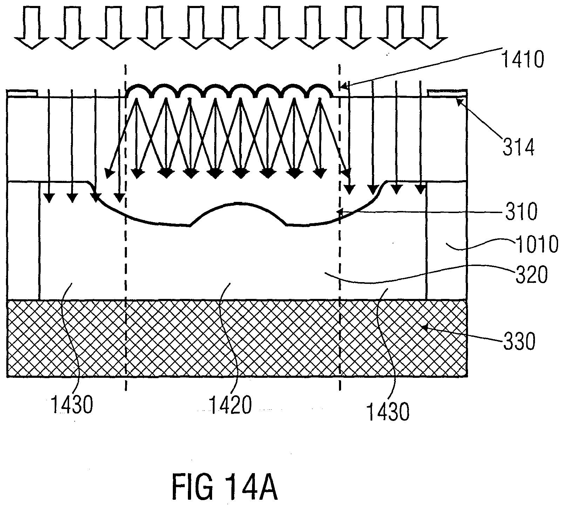

Fig. 14a zeigt eine schematische Darstellung einer Schnittansicht einer Vorrichtung mit einem Abformwerkzeug 310 zur Verwendung in einem Ausführungsbeispiel der vorliegenden Erfindung. Das in der in Fig. 14a gezeigten Vorrichtung verwendete Abformwerkzeug 310 unterscheidet sich durch die bisher gezeigten Abformwerkzeuge durch Mikrostrukturen 1410 zur lokalen Einstellung der Divergenz der Beleuchtung. Weiterhin umfasst das in Fig. 14a gezeigte Abformwerkzeug 310 Blendenstrukturen 314 zur Erzeugung von Kavitäten zum Volumenvorhalt und/oder zur Erzeugung senkrecht zum Substrat bzw. zur Oberfläche 330 verlaufender Kanäle 329,329', wie dies in Fig. 6c anhand der abgeformten Elemente 322e-322f gezeigt ist.

Die Verwendung eines in Fig. 14a gezeigten Abformwerkzeugs 310 ermöglicht damit eine räumliche Steuerung der Divergenz bei dem Schritt 120 der lokal variierenden Bestrahlung. Die abgeblendeten Bereiche zum Volumenvorhalt an flüssigem Polymer bzw. weiterem aushärtbaren Material 321 und/oder zur Erzeugung senkrecht zum Substrat bzw. der Oberfläche 330 verlaufender Kanäle 329,329' oder rundumlaufender Wände 1010 sollen über möglichst steile Strukturkanten verfügen. Diese können mit einer kollimierten, d.h. parallelen Beleuchtung mit UV-Strahlung erzeugt werden, wie sie vom Maskenausrichter ("mask aligner") bereitgestellt wird.

Nachteiligerweise kann eine kollimierte, also parallele und mithin stark gerichtete Beleuchtung bzw. Bestrahlung zur Bildung von Brechzahlgradienten im Polymer bzw. dem aushärtbaren Material führen, was zu Schlieren und mithin verschlechterter optischer Funktion der ausgehärteten Polymere bzw. Materialien der nicht abgeblendeten Bereiche führt.

Zur Vermeidung der Schlierenbildung empfiehlt es sich daher, diffus zu beleuchten. Folglich ist eine gleichzeitige Erzeugung steiler Strukturkanten und homogener Brechzahlverteilungen, also keine Schlierenbildung mit einer bisher bekannten Flutbelichtung unter Nutzung einfacher Werkzeuge nicht möglich.

Die Nutzung der lokalen Mikrostrukturen 1410 oder wie an anderer Stelle mit 319 bezeichnet, beispielsweise Mikrolinsenfelder, diffraktive Strukturen oder Diffusoren auf dem Abformwerkzeug 310 ermöglicht die lokale Anpassung der zur Aushärtung erforderlichen, vom Maskenausrichter kollimiert eingestrahlten UV-Strahlung. Dadurch resultieren Bereiche 1420 erhöhter Divergenz, die die Ausbildung von Schlieren einerseits vermeiden, jedoch keine steilen Kanten im Profil der Strukturen erlauben. Weiterhin resultieren Bereiche 1430 mit steilen Strukturkantenverläufen aber auch erhöhter Schlierenbildung. Die Bereiche 1420 können dabei eine optisch wirksame Fläche, wie beispielsweise eine Linsenoberfläche der herzustellenden Struktur vorgeben. Die Bereiche 1430 mit steilen Strukturverläufen, welche optisch nicht relevant sind, können beispielsweise die Randbereiche bzw. Kanten der herzustellenden Strukturen vorgeben.

Obwohl in dem oben beschriebenen Ausführungsbeispiel Mikrostrukturen 1410 zur Erzeugung der Bereiche 1420 erhöhter Divergenz eingesetzt werden, so könnten in weiteren Ausführungsbeispielen, die Bereiche 1420 erhöhter Divergenz durch Farb- oder Pigmentstrukturen auf dem Abformwerkzeug 310 erzeugt werden. Diese Farb- oder Pigmentstrukturen können einfach aufgedruckt werden, sind daher im Gegensatz zu aufwendigen Mikrostrukturen einfach in der Herstellung und können zusätzlich mit einer nächsten Schicht des Abformwerkzeugs überlagert werden. Lufträume wie sie bei der Nutzung von Mikrolinsen nötig sind, können bei der Nutzung der Farb- oder Pigmentstrukturen zur Erzeugung der Bereiche 1420 erhöhter Divergenz entfallen.

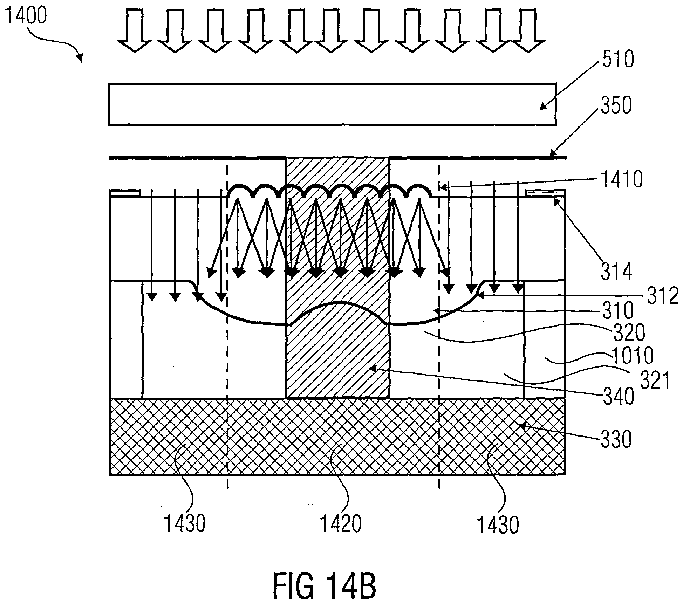

Fig. 14b zeigt eine schematische Darstellung einer Schnittansicht einer Vorrichtung 1400 gemäß *einem* Ausführungsbeispiel der vorliegenden Erfindung. Die Vorrichtung 1400 umfasst eine Oberfläche 330 bzw. ein Substrat 330. Zwischen einer Abformfläche 312 eines Abformwerkzeugs 310 und der Oberfläche 330 ist ein aushärtbares Material 320 angeordnet. Das Abformwerkzeug 310 weist Mikrostrukturen 1410 zur lokalen Einstellung der Divergenz der Beleuchtung bzw. Bestrahlung auf. Weiterhin umfasst das Abformwerkzeug 310 Blendenstrukturen 314 zur Erzeugung von Kavitäten zum Volumenvorhalt und/oder zur Erzeugung senkrecht zur Oberfläche 330 bzw. zum Substrat verlaufender Kanäle. 329, 329'. An einer nicht der Oberfläche 330 zugewandten Oberfläche des Abformwerkzeugs 310 grenzt eine variable Blendenschicht 350 an. An einer nicht dem Abformwerkzeug 310 zugewandten Oberfläche der variablen Blendenschicht 350 grenzt ein variables Graufilter 510 an.

Das variable Graufilter 510 in Kombination mit der variablen Blendenschicht 350 ermöglicht eine lokal variierende Bestrahlung des aushärtbaren Materials 320, so dass weiteres aushärtbares Material 321 nachfließen kann, um einen Materialschrumpf des aushärtbaren Materials 320 zu kompensieren. Die Mikrostrukturen 1410 zur lokalen Einstellung der Divergenz der Beleuchtung verhindern eine Schlierenbildung bei der Aushärtung des aushärtbaren Materials 320 und verbessern damit optische Eigenschaften im Bereich 1420 der erhöhten Divergenz der hergestellten Strukturen. Kollimiert bestrahlte Bereiche 1430 weisen steile Strukturkanten der hergestellten Struktur auf. Die gezeigte Vorrichtung 1400 kann weiterhin um eine Vorrichtung zur Aufbringung eines statischen Drucks, wie sie bereits in vorherigen Ausführungsbeispielen beschrieben wurde, erweitert werden.

Das lokal variierende Bestrahlen kann bevorzugt von innen, also von der Mitte des Bereichs 1420 erhöhter Divergenz nach außen, also zum Rand des Bereichs 1420 erhöhter Divergenz durchgeführt werden um die optischen Eigenschaften der herzustellenden Struktur zu verbessern.

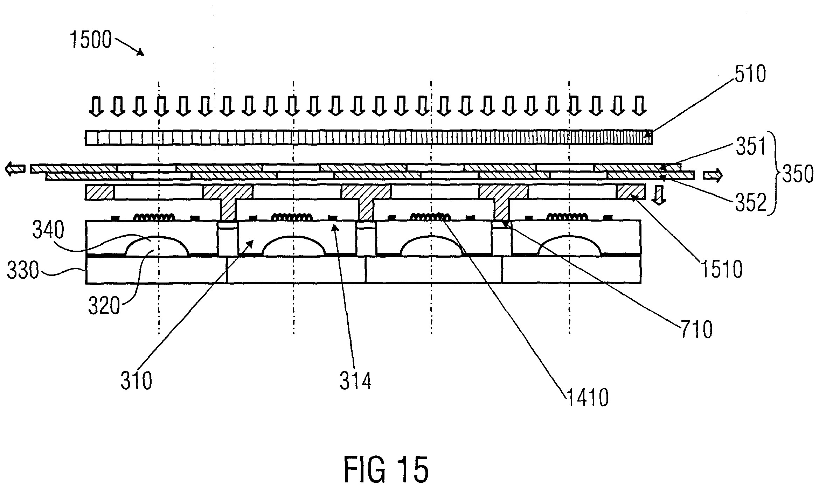

Fig. 15 zeigt eine schematische Darstellung einer Schnittansicht einer Vorrichtung 1500 gemäß einem Ausführungsbeispiel der vorliegenden Erfindung. Die Vorrichtung 1500 stellt eine Kombination aller gezeigten Vorrichtungen in einem Feld dar. Die Vorrichtung 1500 umfasst eine Oberfläche 330. An die Oberfläche 330 grenzt ein Feld von Abformwerkzeugen 310 an. In einem *Bereich* 340 zwischen einer Abformfläche 312 der Abformwerkzeugs 310 und der Oberfläche 330 kann sich aushärtbares Material 320 befinden. Die Abformwerkzeuge 310 umfassen Mikrostrukturen 1410 zur lokalen Einstellung der Beleuchtungsdivergenz und Blendenstrukturen 314 zur Erzeugung von Kavitäten zum Volumenvorhalt und/oder senkrecht zum Substrat verlaufender Kanäle 329, 329'. Weiterhin umfassen die Abformwerkzeuge 310 elastische Membranen 710. An die elastischen Membranen 710 grenzen Stempel 1510 zum Aufbringen externen statischen Drucks pₐ an. Angrenzend an eine nicht den Abformwerkzeugen 310 zugewandte Oberfläche der Stempel 1510 ist eine variable Blendenschicht 350 angeordnet. Die variable Blendenschicht 350 umfasst ein erstes Blendenfeld 351 und ein zweites Blendenfeld 352. Angrenzend an eine nicht den Abformwerkzeugen 310 zugewandte Oberfläche der variablen Blendenschicht 350 ist ein variables Graufilter 510 angeordnet.

Das variable Graufilter 510 in Kombination mit der Blendenschicht 350 ermöglicht eine lokal variierende Bestrahlung des aushärtbaren Materials 320 durch die Abformwerkzeuge 310 hindurch. Während des Schritts 120 des lokal variierenden Bestrahlens wird durch die Stempel 1510 ein externer statischer Druck pₐ auf weiteres aushärtbares Material 321 aufgebracht. Der externe statische Druck pₐ führt zu einem internen Druck pᵢ, welcher zu einem Nachfließen Φ_{P} des weiteren aushärtbaren Materials 321 in die bestrahlten Bereiche 340 führt und damit eine verbesserte Schrumpfkompensation ermöglicht. Die Nutzung der Mikrostrukturen 1410 zur lokalen Einstellung der Beleuchtungsdivergenz ermöglicht eine Diffusion der vom Maskenausrichter kollimiert eingestrahlten UV-Strahlung, um eine Schlierenbildung in den optisch wirksamen Bereichen 1420 der herzustellenden Strukturen zu vermeiden.

Zusammenfassend lässt sich sagen, dass die Vorrichtung 1500 eine Anordnung für die kostengünstige Herstellung, beispielsweise hochgenauer optischer und mechanischer Komponenten durch einen Replikationsprozess auf Basis UV-härtender Polymere darstellt. Hierbei wird das zur Abformung benötigte Abformwerkzeug 310 mit fixen, beispielsweise den Mikrostrukturen 1410 und variablen, wie beispielsweise die Blendenschicht 350 oder das Graufilter 510 optischen Elementen versehen, die eine sich zeitlich änderbare lokale Einstellung der Transmissionsfunktion des Abformwerkzeugs 310 in Amplitude und Phase ermöglichen. Die lokale und zeitlich änderbare Einstellung der Transmissionsfunktion in Amplitude und Phase, bewirkt damit eine Kompensation der bei der UV-Aushärtung von Polymer bzw. dem aushärtbaren Material auftretenden Schrumpfung und mithin eine Reduzierung auftretender mechanischer Spannung auf dem Substrat bzw. der Oberfläche und eine ortsabhängige Erzeugung von Strukturen mit steilen Kantenverläufen bzw. geringer Brechzahlgradienten im auszuhärtenden Material.

Mit anderen Worten gesagt, werden diese genannten Vorteile erreicht durch eine zeitliche Steuerung der Transmissionsfunktion der Beleuchtungsoptik, einen Vorhalt von Polymervolumen, welches nicht gehärtet wird, eine Aufbringung eines statischen Drucks auf das flüssige Polymer und durch eine räumliche Streuung der Divergenz. Die Vorrichtung 1500 kombiniert alle diese genannten Funktionen in einem Feld.

Es sei hier nochmals erwähnt, dass zusätzliches Polymervolumen, also beispielsweise weiteres aushärtbares Material 321 durch zusätzliche Blendenstrukturen im Abformwerkzeug 310 vor Bestrahlung geschützt werden kann, es weiterhin aber auch möglich ist, dass weiteres aushärtbares Material 321 von einem Randbereich um eine optisch genutzte Wirkfläche, wie beispielsweise der Bereich 1420 erhöhter Divergenz, der herzustellenden Struktur nachfließt. Dies ist insbesondere möglich, falls die Bestrahlung zeitlich sequentiell von innen, also beginnend bei der optisch genutzten Wirkfläche, also der optisch relevanten Oberfläche der herzustellenden Struktur nach außen, also zu dem Randbereich der herzustellenden Struktur durchgeführt wird. Durch eine Aufbringung von Druck während dem sequentiellen Bestrahlen auf das weitere aushärtbare Material 321 im Randbereich, fließt das weitere aushärtbare Material 321 vom Randbereich in den Bereich der optisch genutzten Wirkfläche der herzustellenden Struktur nach. Das sich im Randbereich der herzustellenden Struktur befindliche weitere aushärtbare Material 321, welches nicht zur Kompensation des Volumenschrumpfes genutzt wurde, kann zeitlich am Ende der Bestrahlung ausgehärtet werden, wenn die eigentliche Linse, also die optisch genutzte Wirkfläche der herzustellenden Struktur ausgehärtet ist.

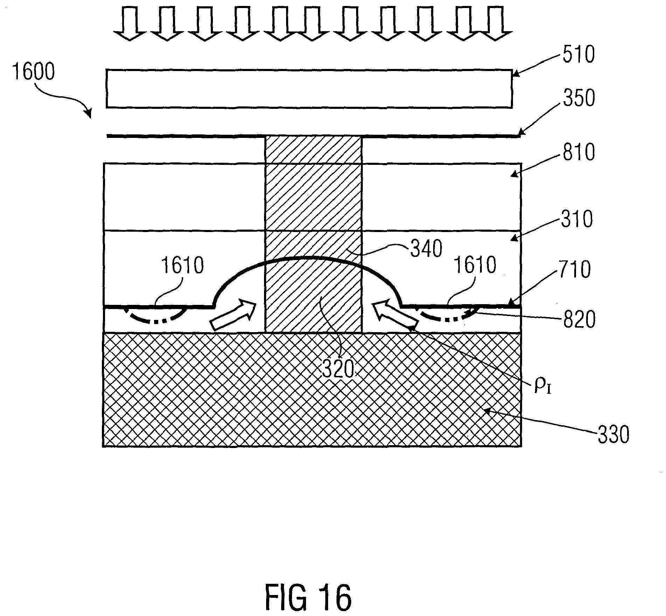

Weiterhin zeigt Fig. 16 eine schematische Darstellung einer Schnittansicht einer Vorrichtung 1600 gemäß einem Ausführungsbeispiel der vorliegenden Erfindung, wobei bei der Vorrichtung 1600 im Gegensatz zu den in den Figuren 7-15 gezeigten Vorrichtungen ein vereinfachter Aufbau des Abformwerkzeugs 310, wie es bereits in den Figuren 6a-6c gezeigt wurde realisiert ist. Mit anderen Worten entspricht das in Fig. 16 gezeigte Abformwerkzeug 310 prinzipiell den in den Fig. 6a-6c gezeigten Abformwerkzeugen 310a-310f. Der vereinfachte Werkzeugaufbau des Abformwerkzeugs 310 ohne Notwendigkeit von Durchbrüchen oder Kanälen ergibt sich, wenn eine Oberfläche, beispielsweise die dem Substrat 330 zugewandte Oberfläche, also die Abformfläche 312 des Formwerkzeugs bzw. Abformwerkzeugs 310 derart strukturiert ist, dass Bereiche existieren, an denen eine elastische Membran 710 (vgl. elastische Membran 316 gemäß den Fig. 6a-6c) haftet und andere, an denen eine elastische Membran 710 nicht haftet, wie dies in Fig. 16 anhand dem in der Vorrichtung 1600 verwendeten Abformwerkzeug 310 gezeigt ist. Das Abformwerkzeug 310 könnte im Gegensatz zu dem in Fig.6a gezeigten Abformwerkzeug 310 keine Blendenstrukturen 314 mehr aufweisen. In Bereichen 1610 ohne Haftung kann die elastische Membran 710 durch Aufbringung eines äußeren statischen Drucks pₐ durch pneumatische oder hydraulische Mimiken ausgewölbt werden. Die Bereiche 1610 ohne Haftung sind in der Figur 16 gestrichelt dargestellt. Die Wölbung der elastischen Membran 710 wird erreicht durch Aufbringung von Druck, beispielsweise durch Hydraulik oder Pressluft. Die Wölbung der elastischen Membran 710 bildet dann einen um das Abformwerkzeug 310 umlaufenden Kanal 820 (vgl. Kanal 318 gemäß den Fig. 6a-6c). Der Kanal 820 wird in den Bereichen 1610 ohne Haftung der elastischen Membran 710 an dem Abformwerkzeug 310 erzeugt. Der im Kanal 820 durch Hydraulik oder Pressluft herrschende äußere statische Druck pₐ, welcher in einer Wölbung der elastischen Membran 710 in den Bereichen 1610 ohne Haftung resultiert, führt zu einem inneren statischen Druck pᵢ in noch flüssigem weiterem aushärtbaren Material 321, welcher zu einem Nachfließen von weiterem aushärtbaren Material 321 zur Schrumpfkompensation in den Bereich 340 der lokalen Bestrahlung resultiert. Eine am Rand des Wafers bzw. der Vorrichtung 1600 umlaufende Dichtung kann hierbei durch die Auslegung der haftenden/nichthaftenden Bereiche auf der Oberfläche des Formwerkzeugs bzw. Abformwerkzeugs 310 erreicht werden.

Die in Fig. 16 gezeigte Vorrichtung 1600 in Verbindung mit dem vereinfachten Abformwerkzeug 310 stellt damit eine vereinfachte Form der in Fig. 8 und Fig. 9 gezeigten Vorrichtung 800 und 900 dar. Der vereinfachte Werkzeugaufbau des Abformwerkzeugs 310 ermöglicht damit eine potentiell kostengünstigere Herstellung des Abformwerkzeugs 310.

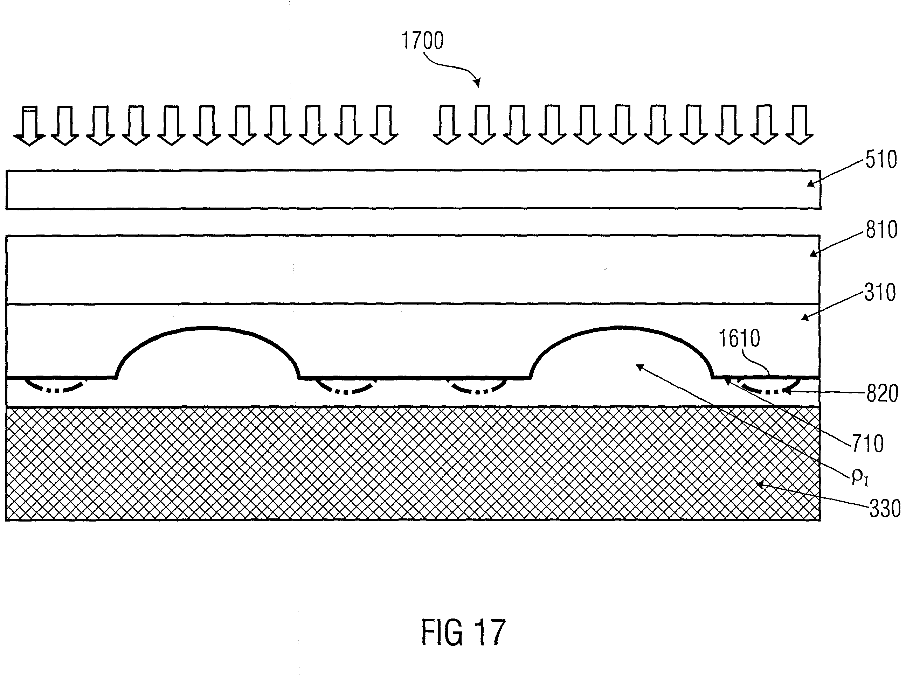

Fig. 17 zeigt eine schematische Darstellung einer Schnittansicht einer Vorrichtung 1700 gemäß einem Ausführungsbeispiel der vorliegenden Erfindung. Die Vorrichtung 1700 umfasst eine Anordnung mehrerer Vorrichtungen 1600, wobei diese nicht durch umlaufende Wände aus ausgehärtetem Polymer getrennt voneinander sind. Die Kanäle 820 zur Aufbringung von statischem Druck der einzelnen Vorrichtungen 1600 sind fluidisch miteinander verbunden. Der äußere statische Druck pₐ in den Kanälen 820 kann durch Pneumatik, beispielsweise Luft oder Hydraulik, beispielsweise Öl, erzeugt werden. Die Vorrichtung 1700 bzw. der Wafer weist dazu, an mindestens einer Stelle eine Durchbohrung, beispielsweise durch die Oberfläche 330 bzw. das Substrat 330 auf, um Druckluft oder Hydraulikflüssigkeit zuzuführen. Die Erzeugung des Drucks pₐ durch Hydraulik hat den Vorteil einer gleichmäßigeren Verteilung des Drucks pₐ über die komplette Vorrichtung 1700 bzw. den kompletten Wafer gegenüber der Erzeugung des Drucks durch Pneumatik. Weiterhin wird das lokal variierende Bestrahlen, durch ein variables Graufilter 510 gesteuert. Natürlich kann die Vorrichtung 1700 weiterhin eine variable Blendenschicht 350 umfassen. Da die einzelnen Vorrichtungen 1600 nicht durch umlaufende Wände aus ausgehärtetem Polymer getrennt sind, kann auf einen ersten Schritt des Aushärtens optisch nicht aktiver Flächen verzichtet werden.

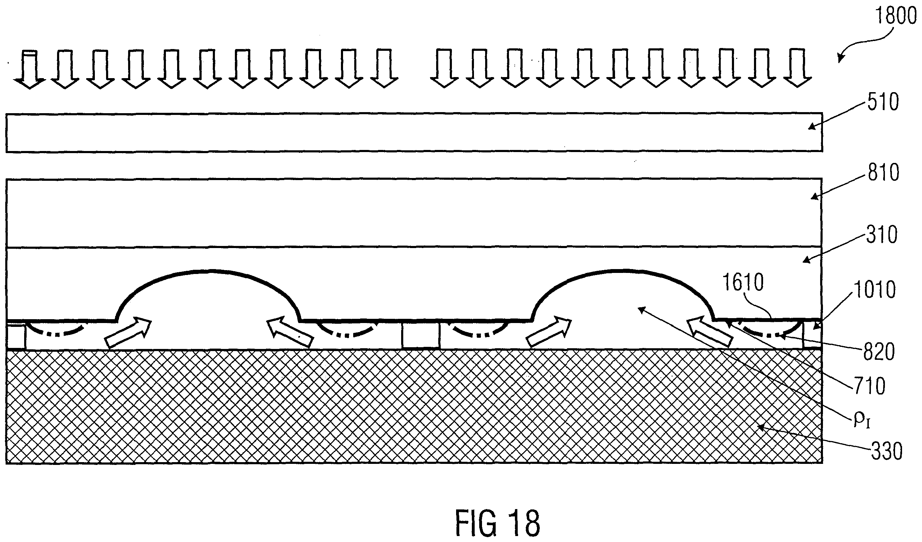

Fig. 18 zeigt eine schematische Darstellung einer Schnittansicht einer Vorrichtung 1800 gemäß einem *Ausführungsbeispiel* der vorliegenden Erfindung. Die Vorrichtung 1800 zeigt analog zur Vorrichtung 1700 eine Anordnung mehrerer Vorrichtungen 1600. Im Gegensatz zu der Vorrichtung 1700 sind die einzelnen Vorrichtungen 1600 durch umlaufende Wände 1010 aus ausgehärtetem Polymer zur Realisierung einer geschlossenen Kavität getrennt voneinander. Weiterhin wird das lokal variierende Bestrahlen in der Vorrichtung 1700, durch ein variables Graufilter 510 gesteuert. Natürlich kann die Vorrichtung 1800 weiterhin eine variable Blendenschicht 350 umfassen. Die Herstellung der umlaufenden Wände 1010 erfolgt wie bereits bei der Vorrichtung 1000 beschrieben. Auch hier sind die einzelnen Kanäle 820 miteinander verbunden um eine gleichmäßige Ausbreitung des in den Kanälen 820 herrschenden, beispielsweise durch einen Kompressor erzeugten äußeren statischen Drucks pₐ über die gesamte Vorrichtung 1800 zu gewährleisten.

Die Oberfläche 330 bzw. das Substrat 330 kann in allen beschriebenen Vorrichtungen aus beispielsweise einem durchgehend einheitlichen Material, wie Glas, Keramik, Glaskeramik, Silizium, Germanium sowie Polymeren, welche eventuell UV härtende oder löslich sind oder aus einem strukturierten Material, also beispielsweise aus einem Substrat mit durchgehenden Kavitäten, bestehen.

Das Abformwerkzeug 310 kann beispielsweise aus einem ausgehärteten UV-Polymer, welcher auf dem Werkzeugsubstrat 810, welches beispielsweise aus Glas sein kann abgeformt wurde. Natürlich kann in weiteren Ausführungsbeispielen das Abformwerkzeug aus einem anderen Material sein.

Obwohl die anhand der Figuren 3-18 beschriebenen Ausführungsbeispiele zum Herstellen einer sphärischen Linse oder Felder sphärischer Linsen dienen, so können weitere Ausführungsbeispiele zur Herstellung von asphärischen Linsen, Freiformflächen oder anderen Strukturen aus UV-härtenden Materialien dienen.

Weiterhin können sich bei der Herstellung von Feldern von Strukturen, die einzelnen Strukturen in ihren Eigenschaften unterscheiden.

Durch die Kompensation des Volumenschrumpfes des Polymers während der Aushärtung können präzisere Abformungen von optischen, mechanischen Komponenten, insbesondere für große Strukturhöhen von mehreren 100 Mikrometern erzielt werden. Dies ist Voraussetzung für die Fertigung mikrooptischer und mikromechanischer Komponenten, wie sie vor allem in der Fertigung für abbildende Systeme auf Waferlevel benötigt werden. Weiterhin kann mechanische Spannung, beispielsweise auf dem Substrat, die ebenfalls durch den Schrumpfungsprozess bedingt ist, reduziert werden. In Folge dessen kann ein Durchbiegen der Wafer, also dem Substrat reduziert und derartige Wafer zu komplexeren Stapeln verarbeitet werden, wie dies u.a. in der Fertigung von Kameramodulen auf Waferlevel erforderlich ist.

Ausführungsbeispiele der vorliegenden Erfindung können ihre Anwendung in der Herstellung mikrooptisch-elektromechanischer Systeme (MOEMS) durch Replikationsprozesse, wie beispielsweise bei der Waverlevel-Fertigung von Kameraobjektiven und optischen Sensoren finden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

## Patentansprüche

1. Abformwerkzeug für ein optisches Bauteil, mit:
einer Abformfläche (312) mit einem Oberflächenbereich (312') zur Definition einer optisch relevanten Oberfläche (323) des optischen Bauteils (322a-322f), wobei das Abformwerkzeug (310; 310a-310f) transparent für Bestrahlung von einer der Abformfläche (312) abgewandten Seite ist; und
einer für Bestrahlung transparenten Membranschicht (316; 710), **dadurch gekennzeichnet, dass**
die Membranschicht (316; 710) auf der Abformfläche (312) angeordnet ist und in einem Kanalbereich (1610) der Abformfläche (312), der zu dem Oberflächenbereich (312') lateral benachbart ist, an der Abformfläche (312) lose anliegt und um den Kanalbereich (1610) fluiddicht mit der Abformfläche (312) verbunden ist, so dass ein Bereich zwischen der Abformfläche (312) und der Innenseite der Membranschicht (316; 710) einen ausdehnbaren Kanal (318, 820) bildet.

2. Abformwerkzeug gemäß Anspruch 1, ferner umfassend:
eine Blendenstruktur (314, 314'), welche lateral benachbart zu dem Oberflächenbereich (312') angeordnet ist und Strahlung von der der Abformfläche (312) abgewandten Seite blockiert, so dass durch die Strahlung aushärtbares Material in Strahlrichtung hinter der Blendenstruktur (314, 314') nicht ausgehärtet wird.

3. Abformwerkzeug gemäß einem der Ansprüche 1 bis 2, ferner umfassend:
eine Struktur (319; 1410) zur Strahldiffusion, welche so angeordnet ist, dass Strahlung von der der Abformfläche (312) abgewandten Seite die den Oberflächenbereich (312') passiert, die Struktur (319; 1410) durchquert.

4. Vorrichtung zum Herstellen einer Struktur aus aushärtbarem Material durch Abformung, mit folgenden Merkmalen:
einem Abformwerkzeug (310; 310a-310f) gemäß einem der Ansprüche 1 bis 3;
einem Bestrahler;
einer Einrichtung zum Anordnen des Abformwerkzeugs (310; 310a-310f) oberhalb einer Oberfläche (330) so dass das aushärtbare Material (320) in einen Bereich (340) zwischen der Oberfläche (330) und einer der Oberfläche (330) zugewandten Abformfläche (312) des Abformwerkzeugs (310; 310a-310f) angrenzt und so dass weiteres aushärtbares Material (321) in den Bereich (340) nachfließen kann;
wobei der Bestrahler ausgebildet ist, um eine lokal variierende Bestrahlung des aushärtbaren Materials (320) in dem Bereich (340) so durchzuführen, dass das aushärtbare Material (320) lateral variierend unterschiedlich schnell aushärtet, und Schrumpfungen beim Aushärten des aushärtbaren Materials (320) durch das weitere aushärtbare Material (321) ausgeglichen werden; und
einer Einrichtung zum Anlegen eines externen Drucks an das weitere aushärtbare Material (321) durch Aufbringen eines Drucks (pₐ) im Kanal (318, 820) des Abformwerkzeugs (312).

5. Vorrichtung gemäß Anspruch 4,
wobei die Vorrichtung ausgebildet ist, um eine Mehrzahl von Strukturen herzustellen; und
wobei der Bestrahler ausgebildet ist, um die lokale Variation der Bestrahlung durch eine Verschiebung zweier Blendenfelder (351, 352) mit fixen Einzelblenden durchzuführen, wobei ein Abstand der Einzelblenden dem einfachen oder mehrfachen Abstand der herzustellenden Strukturen entspricht;

6. Vorrichtung gemäß einem der Ansprüche 4 bis 5, ferner umfassend ein weiteres Abformwerkzeug gemäß einem der Ansprüche 1 bis 3 zur Herstellung einer weiteren Struktur;
wobei der Kanal des Abformwerkzeugs mit dem Kanal des weiteren Abformwerkzeugs verbunden ist; und
wobei die Einrichtung zum Anlegen des externen Drucks an das weitere aushärtbare Material (321) ausgebildet ist, um den Druck in den Kanälen der Abformwerkzeuge aufzubringen.

7. Verfahren zum Herstellen einer Struktur aus aushärtbarem Material durch Abformung, **dadurch gekennzeichnet, dass** das Verfahren folgende Schritte aufweist:
Anordnen (110) eines Abformwerkzeugs (310; 310a-310f) gemäß einem der Ansprüche 1 bis 3 oberhalb einer Oberfläche (330), so dass in einem ersten Bereich (340) zwischen dem Abformwerkzeug (310; 310a-310f) und der Oberfläche (330) das aushärtbare Material (320) an die Oberfläche (330) und eine der Oberfläche (330) zugewandten Abformfläche (312) des Abformwerkzeugs (310; 310a-310f) angrenzt, und so dass weiteres aushärtbares Material (321) in den ersten Bereich (340) nachfließen kann;
Lokal variierendes Bestrahlen (120) des aushärtbaren Materials (320) in dem ersten Bereich (340), so dass das aushärtbare Material (320) lateral variierend unterschiedlich schnell aushärtet, und Schrumpfungen beim Aushärten des aushärtbaren Materials (320) durch das weitere aushärtbare Material (321) ausgeglichen werden; und
Anlegen (130) eines externen Drucks an das weitere aushärtbare Material (321) während des Bestrahlens durch Aufbringen eines Drucks (pₐ) im Kanal (318, 820) des Abformwerkzeug (312).

8. Verfahren gemäß Anspruch 7,
bei dem der Schritt (120) des lokal variierenden Bestrahlens von einer der Abformoberfläche (312) abgewandten Seite des Abformwerkzeugs (310; 310a-310f) durch das Abformwerkzeug (310; 310a-310f) hindurch durchgeführt wird.

9. Verfahren gemäß einem der Ansprüche 7 bis 8,
bei dem die lokale Variation der Bestrahlung durch eine Verschiebung zweier Blenden (350, 351, 352) mit lokal variierender Transparenz und/oder durch ein Graufilter (510) mit elektrisch oder mechanisch einstellbarer variabler Transparenz erfolgt.

10. Verfahren gemäß einem der Ansprüche 7 bis 9,
bei dem die lokal variierende Bestrahlung zumindest teilweise durch eine Struktur (319; 1410) zur Strahldiffusion hindurch erfolgt.

11. Verfahren gemäß einem der Ansprüche 7 bis 10,
bei dem das lokal variierende Bestrahlen derart durchgeführt wird, dass weiteres aushärtbares Material (321) aus einem Ausgleichsbereich des Abformwerkzeugs (310; 310a-310f) in den Bereich (340) nachfließt, der von einer Strahlung, mit der das Bestrahlen erfolgt nicht erreicht wird.

12. Verfahren gemäß einem der Ansprüche 7 bis 11, ferner umfassend:
Aushärten eines Randbereichs (1010) aus aushärtbarem Material (320), der in lateral geschlossener Weise den Bereich (340) umschließt, zwischen dem Schritt (110; 210) des Anordnens des Abformwerkzeugs (310; 310a-310f) und dem Schritt (120; 220) des Lokal variierenden Bestrahlens (120; 220).

13. Verfahren gemäß einem der Ansprüche 7 bis 12,
wobei bei dem Verfahren eine Mehrzahl von Strukturen hergestellt wird; und
wobei die lokale Variation der Bestrahlung durch eine Verschiebung zweier Blendenfelder (351, 352) mit fixen Einzelblenden erfolgt, wobei ein Abstand der Einzelblenden dem einfachen oder mehrfachen Abstand der herzustellenden Strukturen entspricht.

14. Verfahren gemäß einem der Ansprüche 7 bis 13,
wobei das Anordnen (110) und das lokal variierende Bestrahlen (120) ferner unter Verwendung eines weiteren Abformwerkzeugs gemäß einem der Ansprüche 1 bis 3 durchgeführt werden, um eine weitere Struktur herzustellen;
wobei der Kanal des Abformwerkzeugs mit dem Kanal des weiteren Abformwerkzeugs fluidisch verbunden ist; und
wobei bei dem Anlegen (130) des externen Drucks an das weitere aushärtbare Material (321) während des Bestrahlens, der Druck (pₐ) in den Kanälen (318, 820) der Abformwerkzeuge aufgebracht wird. (312).

## Claims

1. Molding tool for an optical component, comprising:
a molding face (312) comprising a surface region (312') for defining an optically relevant surface (323) of the optical component (322a-322f), the molding tool (310; 310a-310f) being transparent to irradiation from a side which faces away from the molding face (312); and
a membrane layer (316; 710) which is transparent to irradiation, **characterized in that**
the membrane layer (316; 710) is arranged on the molding face (312) and is loosely abutting the molding face (312) in a channel region (1610) of the molding face (312) which is laterally adjacent to the surface region (312'), and being connected, around the channel region (1610), to the molding face (312) in a fluid-tight manner, so that a region between the molding face (312) and the inner surface of the membrane layer (316; 710) forms an expandable channel (318, 820).

2. Molding tool as claimed in claim 1, further comprising:
an aperture structure (314, 314') which is arranged laterally adjacent to the surface region (312') and blocks radiation from the side facing away from the molding face (312), so that material curable by the radiation is not cured downstream from the aperture structure (314, 314') in the beam direction.

3. Molding tool as claimed in any of claims 1 to 2, further including:
a structure (319; 1410) for beam diffusion, which is arranged such that radiation from the side facing away from the molding face (312) which passes the surface region (312') traverses the structure (319; 1410).

4. Apparatus for producing a structure from curable material by means of molding, comprising:
a molding tool (310; 310a-310f) as claimed in any of claims 1 to 3;
an irradiator;
a means for arranging the molding tool (310; 310a-310f) above a surface (330), so that the curable material (320) adjoins a region (340) between the surface (330) and a molding face (312) of the molding tool (310; 310a-310f) which faces the surface (330), and so that additional curable material (321) may continue to flow into the region (340);
wherein the irradiator is configured to perform locally varying irradiation of the curable material (320) in the region (340), so that the curable material (320) cures at different speeds in a laterally varying manner and so that shrinkages occurring during curing of the curable material (320) are compensated for by the additional curable material (321); and
a means for applying an external pressure to the additional curable material (321) by applying a pressure (pₐ) within the channel (318, 820) of the molding tool (312).

5. Apparatus as claimed in claim 4,
the apparatus being configured to produce a plurality of structures; and
the irradiator being configured to perform the local variation of the irradiation by shifting two aperture fields (351, 352) having fixed individual apertures, a distance of the individual apertures corresponding to the distance or to a multiple of the distance of the structures to be produced.

6. Apparatus as claimed in any of claims 4 to 5, further comprising a further molding tool as claimed in any of claims 1 to 3 for producing a further structure;
the channel of the molding tool being connected to the channel of the further molding tool; and
the means for applying the external pressure to the additional curable material (321) being configured to apply the pressure within the channels of the molding tools.

7. Method of producing a structure from curable material by molding, the method comprising:
arranging (110) a molding tool (310; 310a-310f) as claimed in any of claims 1 to 3 above a surface (330), so that in a first region (340) between the molding tool (310; 310a-310f) and the surface (330), the curable material (320) adjoins the surface (330) and a molding face (312) of the molding tool (310; 310a-310f) which faces the surface (330), and so that additional curable material (321) may continue to flow into the first region (340);
irradiating (120) the curable material (320) in the first region (340) in a locally varying manner, so that the curable material (320) cures at different speeds in a laterally varying manner, and such that shrinkages occurring during curing of the curable material (320) are compensated for by the additional curable material (321); and
applying (130) an external pressure to the additional curable material (321) during irradiation by applying a pressure (pₐ) within the channel (318, 820) of the molding tool (312).

8. Method as claimed in claim 7,
wherein the step (120) of irradiating in a locally varying manner is performed, through the molding tool (310; 310a-310f), from a side of the molding tool (310; 310a-310f) which faces away from the molding face (312).

9. Method as claimed in any of claims 7 to 8,
wherein the local variation of the irradiation is performed by a displacement of two apertures (350, 351, 352) having locally varying transparencies and/or by a gray filter (510) having electrically and/or mechanically adjustable variable transparency.

10. Method as claimed in any of claims 7 to 9,
wherein the locally varying irradiation is performed at least partly through a structure (319; 1410) for beam diffusion.

11. Method as claimed in claims 7 to 10,
wherein the locally varying irradiation is performed such that additional curable material (321) continues to flow from a compensating region of the molding tool (310; 310a-310f) into the region (340) which is not reached by a radiation with which said irradiation is performed.

12. Method as claimed in any of claims 7 to 11, further comprising:
curing an edge region (1010) of curable material (320), which encloses the region (340) in a laterally closed manner, between the step (110; 210) of arranging the molding tool (310; 310a-310f) and the step (120; 220) of locally varying irradiation (120; 220).

13. Method as claimed in any of claims 7 to 12,
said method comprising producing a plurality of structures; and
the local variation of the irradiation being performed by shifting two aperture fields (351, 352) having fixed individual apertures, a distance of the individual apertures corresponding to the distance or to a multiple of the distance of the structures to be produced.

14. Method as claimed in any of claims 7 to 13,
said arranging (110) and said irradiating (120) in a in a locally varying manner further being performed while using a further molding tool as claimed in any of claims 1 to 3 to produce a further structure;
the channel of the molding tool being fluidically connected to the channel of the further molding tool; and
applying (130) the external pressure to the additional curable material (321) during irradiation includes applying the pressure (pₐ) within the channels (318, 820) of the molding tools (312).

## Revendications

1. Outil de moulage pour un composant optique, avec:
une face de moulage (312) avec une zone de surface (312') pour définir une surface optiquement pertinente (323) du composant optique (322a à 322f), l'outil de moulage (310; 310a à 310f) étant transparent pour l'irradiation d'un côté opposé à la face de moulage (312); et
une couche de membrane transparente pour l'irradiation (316; 710),
**caractérisé par le fait que**
la couche de membrane (316; 710) est disposée sur la face de moulage (312) et s'appuie librement, dans une zone de canal (1610) de la face de moulage (312) qui est latéralement adjacente à la zone de surface (312'), sur la face de moulage (312) et est connectée autour de la zone de canal (1610) de manière étanche aux fluides à la face de moulage (312), de sorte qu'une zone entre la face de moulage (312) et la face intérieure de la couche de membrane (316; 710) constitue un canal expansible (318, 820).

2. Outil de moulage selon la revendication 1, comportant par ailleurs:
une structure de masque (314, 314') qui est disposée latéralement adjacente à la zone de surface (312') et bloque le rayonnement depuis le côté opposé à la face de moulage (312), de sorte que le matériau durcissable dans la direction de rayonnement derrière la structure de masque (314, 314') ne soit pas durci par le rayonnement.

3. Outil de moulage selon l'une des revendications 1 à 2, comportant par ailleurs:
une structure (319; 1410) de diffusion de rayonnement qui est disposée de sorte que le rayonnement depuis le côté opposé à la face de moulage (312), qui passe à travers la zone de surface (312'), traverse la structure (319; 1410).

4. Dispositif de fabrication d'une structure en matériau durcissable par moulage, aux caractéristiques suivantes:
un outil de moulage (310; 310a à 310f) selon l'une des revendications 1 à 3;
un irradiateur;
un moyen destiné à disposer l'outil de moulage (310; 310a à 310f) au-dessus d'une surface (330) de sorte que le matériau durcissable (320) soit adjacent dans une zone (340) entre la surface (330) et une face de moulage (312) de l'outil de moulage (310; 310a à 310f) orientée vers la surface (330) et de sorte que l'autre matériau durcissable (321) dans la zone (340) puisse continuer à s'écouler;
dans lequel l'irradiateur est conçu pour réaliser une irradiation variant localement du matériau durcissable (320) dans la zone (340) de sorte que le matériau durcissable (320) durcisse de manière variable latéralement à une vitesse différente, et que les rétrécissements au cours du durcissement du matériau durcissable (320) soient compensées par l'autre matériau durcissable (321); et
un moyen destiné à appliquer une pression externe sur l'autre matériau durcissable (321) en appliquant une pression (pₐ) dans le canal (318, 820) de l'outil de moulage (312).

5. Dispositif selon la revendication 4,
dans lequel le dispositif est conçu pour fabriquer une pluralité de structures; et
dans lequel l'irradiateur est conçu pour réaliser la variation locale de l'irradiation par un déplacement de deux champs de masquage (351, 352) à diaphragmes individuels fixes, où une distance entre les diaphragmes individuels correspond à la distance simple ou multiple entre les structures à fabriquer.

6. Dispositif selon l'une des revendications 4 à 5, comportant par ailleurs un autre outil de moulage selon l'une des revendications 1 à 3 pour la fabrication d'une autre structure;
dans lequel le canal de l'outil de moulage est connecté au canal de l'autre outil de moulage; et
dans lequel le moyen pour appliquer la pression externe sur l'autre matériau durcissable (321) est conçu pour appliquer la pression dans les canaux des outils de moulage.

7. Procédé de fabrication d'une structure en matériau durcissable par moulage, **caractérisé par le fait que** le procédé présente les étapes suivantes consistant à:
disposer (110) un outil de moulage (310; 310a à 310f) selon l'une des revendications 1 à 3 au-dessus d'une surface (330), de sorte que, dans une première zone (340) entre l'outil de moulage (310; 310a à 310f) et la surface (330), le matériau durcissable (320) soit adjacent à la surface (330) et à une face de moulage (312) de l'outil de moulage (310; 310a à 310f) orientée vers la surface (330), et de sorte que l'autre matériau durcissable (321) puisse continuer à s'écouler dans la première zone (340);
irradier de manière variable localement (120) le matériau durcissable (320) dans la première zone (340) de sorte que le matériau durcissable (320) se durcisse de manière variable latéralement à une vitesse différente, et que les rétrécissements lors du durcissement du matériau durcissable (320) soient compensées par l'autre matériau durcissable (321); et
appliquer (130) une pression externe sur le matériau durcissable (321) pendant l'irradiation par application d'une pression (pₐ) dans le canal (318, 820) de l'outil de moulage (312).

8. Procédé selon la revendication 7,
dans lequel l'étape (120) consistant à irradier de manière variable localement une face de l'outil de moulage (310; 310a à 310f) opposée à la face de moulage (312) est réalisée à travers l'outil de moulage (310; 310a à 310f).

9. Procédé selon l'une des revendications 7 à 8,
dans lequel la variation locale de l'irradiation a lieu par un déplacement de deux diaphragmes (350, 351, 352) à transparence variable localement et/ou par un filtre gris (510) à transparence variable réglable électriquement ou mécaniquement.

10. Procédé selon l'une des revendications 7 à 9,
dans lequel l'irradiation variable localement a lieu au moins partiellement à travers une structure (319; 1410) de diffusion de rayonnement.

11. Procédé selon l'une des revendications 7 à 10,
dans lequel l'irradiation variable localement est réalisée de sorte qu'un autre matériau durcissable (321) continue à s'écouler d'une zone de compensation de l'outil de moulage (310; 310a à 310f) dans la zone (340) qui n'est pas atteinte par une irradiation par laquelle a lieu l'irradiation.

12. Procédé selon l'une des revendications 7 à 11, comportant par ailleurs le fait de:
laisser durcir une zone de bord (1010) en matériau durcissable (320) qui entoure la zone (340) de manière fermée latéralement, entre l'étape (110; 210) consistant à disposer l'outil de moulage (310; 310a à 310f) et l'étape (120; 220) consistant à irradier de manière variable localement (120; 220).

13. Procédé selon l'une des revendications 7 à 12,
dans lequel sont fabriquées, dans le procédé, une pluralité de structures; et
dans lequel la variation locale de l'irradiation a lieu par un déplacement de deux champs de masquage (351, 352) à diaphragmes individuels fixes, où une distance entre les diaphragmes individuels correspond à la distance simple ou multiple entre les structures à fabriquer.

14. Procédé selon l'une des revendications 7 à 13,
dans lequel la disposition (110) et l'irradiation variable localement (120) sont par ailleurs réalisées à l'aide d'un autre outil de moulage selon l'une des revendications 1 à 3, pour fabriquer une autre structure;
dans lequel le canal de l'outil de moulage est connecté en fluide au canal de l'autre outil de moulage; et
dans lequel est appliqué, lors de l'application (130) de la pression externe sur le matériau durcissable (321) pendant l'irradiation, la pression (pₐ) dans les canaux (318, 820) des outils de moulage (312).
